# EUROPEAN PATENT SPECIFICATION

(11) **EP 4 651 478 B1**
(45) Date of publication and mention of the grant of the patent: **21.10.2026**
(21) Application number: 25174680.6
(22) Date of filing: 07.05.2025
(51) Int. Cl.: H04N 1/00, H04N 1/32

(54) **IMAGE PROCESSING APPARATUS, METHOD EXECUTED BY IMAGE PROCESSING APPARATUS, AND PROGRAM**
BILDVERARBEITUNGSVORRICHTUNG, VON DER BILDVERARBEITUNGSVORRICHTUNG AUSGEFÜHRTES VERFAHREN UND PROGRAMM
APPAREIL DE TRAITEMENT D'IMAGE, PROCÉDÉ EXÉCUTÉ PAR L'APPAREIL DE TRAITEMENT D'IMAGE ET PROGRAMME

(30) Priority: 14.05.2024 JP 2024078846
(43) Date of publication of application: 19.11.2025
(73) Proprietor: CANON KABUSHIKI KAISHA, Tokyo 146-8501 (JP)
(72) Inventor: INOUE, Kenta, Tokyo (JP)
(74) Representative: WESER & Kollegen Patentanwälte PartmbB

(56) References cited:
- JP-A- 2022 028 251
- US-A1- 2013 113 823
- US-A1- 2015 172 477
- US-A1- 2018 198 931
- US-A1- 2023 195 391
- US-A1- 20240 103 778

## Description

### BACKGROUND OF THE INVENTION

### Field of the Invention

The present disclosure relates to a technology for the display of information in an image processing apparatus.

### Description of the Related Art

In a case in which an abnormality that a user cannot handle by themselves occurs in an image processing apparatus, a service person makes an emergency dispatch. In addition, the service person performs maintenance of the image processing apparatus by performing periodic visits to the user. During emergency dispatch or periodic visits, the service person needs to take action by determining the state of the image processing apparatus immediately so as not to interfere with use of the image processing apparatus by the user as much as possible. As a method for confirming the state of the image processing apparatus, in a service mode screen for exclusive use by service persons, which has existed conventionally, states of parts, error history, jam history, and the like are displayed in a menu format. In such a case, the service person must move back and forth between each menu and acquire necessary information, and this process is inefficient.

Japanese Patent Application Laid-Open No. 2013-102350 discloses means for displaying a state confirmation screen that consolidates errors of the apparatus and errors of each application on a single screen as a method for confirming the state of the image processing apparatus. Although consolidating the state of the apparatus on a single screen eliminates effort required for moving back and forth between screens, the state confirmation screen of Japanese Patent Application Laid-Open No. 2013-102350 does not provide sufficient information to the service person. For example, the service person needs to identify causes by taking into consideration occurrence locations of abnormalities (errors, jams, and the like), positional relationships of a plurality of abnormalities, states of parts, error history, jam history, or usage status of the apparatus (temperature, humidity, number of printed sheets, and the like), and determine appropriate measures. In addition, as described above, performing work by the service person efficiently in as short a time as possible is required.

As described above, in conventional menu format displays, effort is required because screen navigation occurs for the service person to acquire the necessary overall state of the apparatus.

In contrast, in a method that displays the state of the apparatus on a single state confirmation screen as in Japanese Patent Application Laid-Open No. 2013-102350, the service person cannot grasp positional relationships of abnormalities in a case in which, for example, two or more abnormalities occur. If occurrence locations of two or more abnormalities are close, performing work collectively for those abnormalities is more efficient.

### SUMMARY OF THE INVENTION

The present disclosure provides a technology for efficiently displaying information necessary for maintenance work of an image processing apparatus within a limited screen region.

An image processing apparatus having a display unit according to one aspect of the present disclosure comprises: a management means for managing state information and history information of the image processing apparatus, and a processing means for performing processing based on the managed state information and history information, wherein the processing based on the state information and history information includes: display of display contents on the display unit in a single screen based on both first display information for displaying, for each category, information related to abnormalities among the state information and history information of the image processing apparatus by dividing the information related to abnormalities into a plurality of different categories, and second display information for displaying data corresponding to the information related to abnormalities at corresponding locations on a schematic diagram of the image processing apparatus. Further features of the present invention will become apparent from the following description of embodiments with reference to the attached drawings.

### BRIEF DESCRIPTION OF THE DRAWINGS

FIG. 1 is a diagram showing a configuration of a system comprising an image processing apparatus according to an embodiment.
FIG. 2 is a block diagram showing a hardware configuration of the image processing apparatus.
FIG. 3 is a block diagram showing an example of processing functions that show functions related to the present embodiment.
FIG. 4 is a diagram showing an example of a top screen in a case in which an abnormality exists in the image processing apparatus.
FIG. 5 is a diagram showing an example of a top screen in a case in which no abnormality exists in the image processing apparatus.
FIG. 6 is a diagram showing a parts life screen.
FIG. 7 is a diagram showing a state details screen.
FIG. 8 is a diagram showing a fault detection screen.
FIG. 9 is a diagram showing a contamination details screen.
FIG. 10 is a diagram showing an error screen.
FIG. 11 is a diagram showing an error details screen.
FIG. 12 is a diagram showing a jam screen.
FIG. 13 is a diagram showing a jam details screen.
FIG. 14 is a diagram showing a temperature change screen.
FIG. 15 is a diagram showing a humidity change screen.
FIG. 16 is a diagram showing a number of printed sheets screen.
FIG. 17 is a diagram showing a cassette history screen.
FIG. 18 shows history data used for displaying information of parts life.
FIG. 19 shows history data used for displaying information of fault detection.
FIG. 20 shows history data used for displaying information of errors.
FIG. 21 shows history data used for displaying information of jams.
FIG. 22 shows temperature data used for displaying information of temperature changes.
FIG. 23 shows humidity data used for displaying information of humidity changes.
FIG. 24 shows number of printed sheets data used for displaying information of number of printed sheets.
FIG. 25 shows cassette operation data used for displaying cassette history information.
FIG. 26 is a flowchart showing an example of display processing of a top screen that includes activation processing of a state monitor.
FIG. 27 is a flowchart showing a continuation of FIG. 26.
FIG. 28 is a flowchart showing a continuation of FIG. 27.
FIG. 29 is a flowchart showing an example of screen transition processing according to operations for switching screens of FIG. 4 to FIG. 17.
FIG. 30 is a flowchart showing a continuation of FIG. 29.
FIG. 31 is a flowchart showing a continuation of FIG. 30.

### DESCRIPTION OF THE EMBODIMENTS

Hereinafter, embodiments for carrying out the present invention will be explained in detail. Note that the embodiments to be explained below are examples for carrying out the present invention and should be modified or adjusted as appropriate depending on the configuration of an apparatus to which the present invention is applied and various conditions, and the present invention is not limited to the following embodiments. Additionally, in all the drawings, components having the same function are denoted by the same reference numerals, and the repetitive explanation thereof will be omitted.

### <System Configuration>

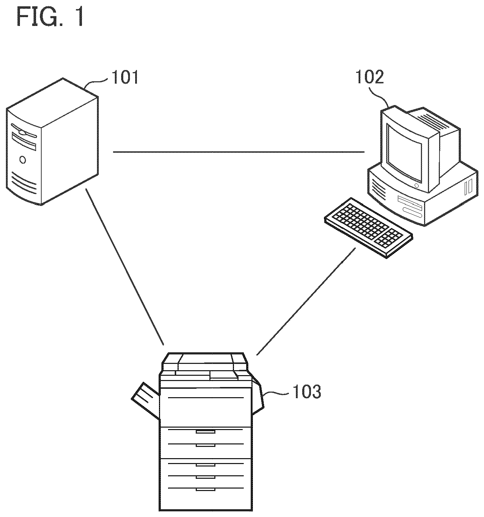

FIG. 1 is a diagram showing a configuration of a system comprising an image processing apparatus according to an embodiment. The system of the present embodiment includes an image processing apparatus 103, a server PC (Personal Computer) 101, and a client PC 102. These image processing apparatus 103, server PC 101, and client PC 102 are connected to each other via a network.

The network is a communication network that is realized by using any of, or a combination of, for example, LAN, WAN, telephone lines, dedicated digital lines, ATM, frame relay lines, cable television lines, wireless lines for data broadcasting, and the like. A plurality of image processing apparatuses 103 may be installed in a single local area.

The image processing apparatus 103 is a Multi-Function Peripheral (MFP). That is, the image processing apparatus 103 is provided with print functions, copy functions, facsimile transmission functions, scan functions, and the like. The image processing apparatus 103 has not only a function for copying paper originals, but also a function for printing print data sent from an external printer driver. In addition, the image processing apparatus 103 has a function (SEND function) for reading paper originals and sending image data thereof to an external file server or to a mail address. Furthermore, the image processing apparatus 103 has functions such as a function for sending data to another image processing apparatus and performing printing at the destination image processing apparatus (remote copy function, facsimile transmission function).

Although the image processing apparatus 103 is connected via Ethernet (not shown), this connection serves merely as an example. All information processing apparatuses (server PC 101, client PC 102) other than the image processing apparatus 103 may be configured by a single computer. Alternatively, the system may be configured by the image processing apparatus 103 alone by incorporating the information processing apparatuses into the image processing apparatus 103. Information processing apparatuses used in the present embodiment need not be PCs and may be terminal devices other than PCs or smartphones. A printing method of the image processing apparatus 103 used in the present embodiment may be an electrophotographic method or an inkjet method, or may be another method.

### <Hardware Configuration of Image Processing Apparatus>

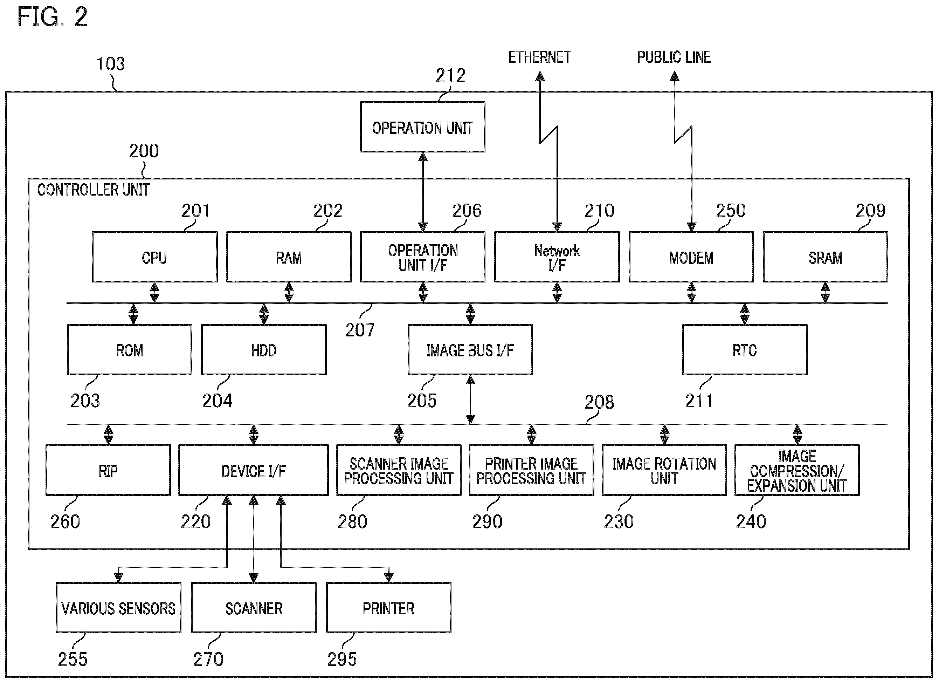

FIG. 2 is a block diagram showing a hardware configuration of the image processing apparatus 103. The image processing apparatus 103 is provided with a controller unit 200, an operation unit 212, various sensors 255, a scanner 270, and a printer 295.

The controller unit 200 is connected to the scanner 270 that is an image input device and the printer 295 that is an image output device, and performs input and output of image information and device information by connecting to Ethernet and public lines.

The controller unit 200 comprises a CPU 201, a RAM 202, a ROM 203, a HDD (Hard Disk Drive) 204, and an operation unit I/F 206. In addition, the controller unit 200 has a network I/F 210, a modem 250, an SRAM 209, an image bus I/F 205, and an RTC (Real Time Clock) 211. Each of these units is connected to a system bus 207.

Furthermore, the controller unit 200 comprises a RIP (Raster Image Processor) 260, a device I/F 220, a scanner image processing unit 280, a printer image processing unit 290, an image rotation unit 230, and an image compression/expansion unit 240. Each of these units is connected to an image bus 208.

The CPU 201 is a controller that controls the image processing apparatus 103. The RAM 202 is a system work memory for the CPU 201 to operate, and is also an image memory for temporarily storing image data. The ROM 203 is a boot ROM, in which a boot program of the system is stored. The HDD 204 stores system software, applications, and image data.

It should be noted that the implementation is not limited to the CPU 201, and a PLD (Programmable Logic Device) such as an FPGA (Field Programmable Gate Array) may be used. Alternatively, an ASIC (Application Specific Integrated Circuit) may be used, or a DSP (Digital Signal Processor) may be used. In addition, an apparatus having a storage medium other than the HDD 204 may be used. The storage medium other than the HDD 204 is, for example, flash memory, SSD (Solid State Drive), optical storage media, or magneto-optical storage media, and the like.

The operation unit I/F 206 is an interface unit that interfaces with the operation unit 212 comprising a touch panel, and outputs image data to be displayed to the operation unit 212. In addition, the operation unit I/F 206 conveys information input by a user from the operation unit 212 to the CPU 201. The network I/F 210 is connected to the network and performs input and output of information.

The modem 250 is connected to public lines and performs input and output of information. The SRAM 209 is a non-volatile storage medium capable of high-speed operation. The RTC 211 performs processing to continue counting the current time even in a state in which power to the controller unit 200 is not supplied.

The image bus I/F 205 is a bus bridge that connects the system bus 207 and the image bus 208 that transfers image data at high speed, and the bus bridge converts data structures. The image bus 208 is configured by, for example, a PCI bus or IEEE1394.

The RIP 260 expands PDL code into bitmap images.

The device I/F 220 is connected to the various sensors 255 and acquires states of the image processing apparatus. In addition, the device I/F 220 connects the scanner 270 and the printer 295 with the controller unit 200, and performs conversion between synchronous systems and asynchronous systems of image data.

The scanner image processing unit 280 performs correction, processing, and editing with respect to input image data. The printer image processing unit 290 performs correction (printer correction), resolution conversion, and the like with respect to print output image data. The image rotation unit 230 performs rotation of image data. The image compression/expansion unit 240 performs compression and expansion processing of images.

### <Software Configuration of Image Processing Apparatus>

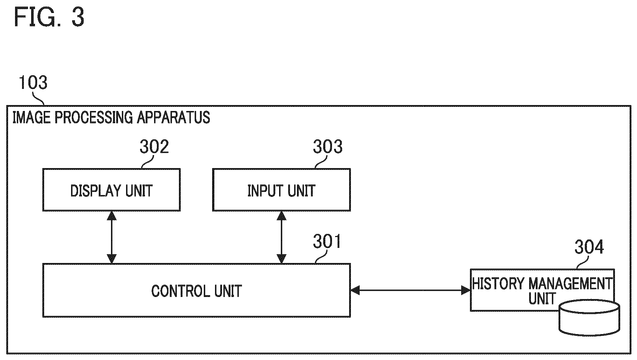

FIG. 3 is a block diagram showing an example of processing functions that show functions related to the present embodiment among units in the image processing apparatus 103. As shown in the explanation of FIG. 2, the functions of the function units explained hereinafter and processing related to flowcharts described later are realized by the CPU 201 executing all or part of a program on the RAM 202 based on the program stored in the ROM 203.

A display unit 302 displays states of the image processing apparatus 103 and operation menus on the operation unit 212. An input unit 303 accepts operation instructions from a user. A history management unit 304 processes information and stores state information and history (usage history) information of the image processing apparatus 103 in a history DB. The history management unit 304 is an example of a management unit that manages state information and history information of the image processing apparatus. A control unit 301 controls the display unit 302, the input unit 303, and the history management unit 304. The control unit 301, or mainly the CPU 201 and the like, is an example of a processing unit that performs processing based on state information and history information managed by the management unit.

### <Screen Configuration According to an Embodiment>

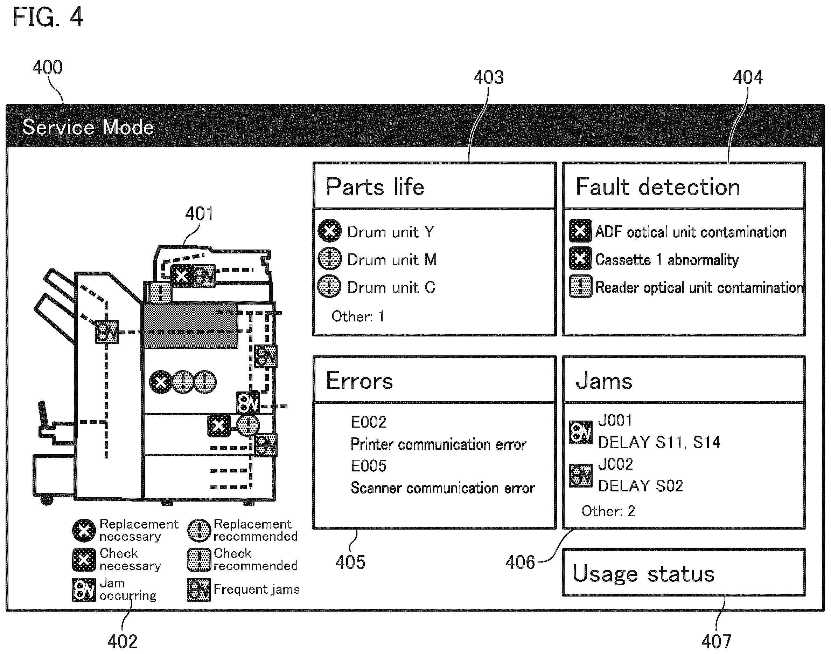

Next, a state monitor screen for displaying states and history of the image processing apparatus 103 for a service person will be explained with reference to FIG. 4 to FIG. 15. Although the state monitor screen is a screen displayed on the operation unit 212 of the image processing apparatus 103, the state monitor screen is a screen that is activated only by special operations because the state monitor screen is not for general users. In addition, each screen data explained in FIG. 4 to FIG. 15 is displayed based on data recorded in the history management unit 304.

FIG. 4 is a diagram showing an example of a top screen 400 in a case in which an abnormality exists in the image processing apparatus 103. The display unit 302 displays occurrence locations of abnormalities of the image processing apparatus and types thereof by mapping icons (icon images) on a cross-sectional diagram 401 of the image processing apparatus. The cross-sectional diagram 401 is an example of a schematic diagram that schematically shows the image processing apparatus. Paper transport paths are also shown in the cross-sectional diagram 401, and the service person can know whether abnormalities are likely to affect use of main functions of the image processing apparatus such as scanning and printing. Although the paper transport paths are shown by dotted lines in the cross-sectional diagram 401, the paper transport paths may be shown by other lines or figures.

A legend 402 shows types and contents of icons mapped and displayed on the cross-sectional diagram 401. The types indicate whether parts requiring replacement due to progressing deterioration exist, whether checking is necessary due to fault occurrence, whether locations exist at which jams are occurring or frequently occurring, and the like. Information of abnormalities (contents, types, and the like) and coordinates of abnormality occurrence locations on the cross-sectional diagram 401 are predetermined in a one-to-one or many-to-one relationship.

The display unit 302 displays information related to abnormalities among state information and history information of the image processing apparatus in the top screen 400 by dividing the information related to abnormalities into a plurality of different categories and displaying the information related to abnormalities for each category. The plurality of categories includes, for example, parts life 403, fault detection 404, errors 405, jams 406, and usage status (usage status button) 407. In the present embodiment, among these categories, categories of information related to abnormalities with respect to states are classified into parts life 403, fault detection 404, errors 405, and jams 406. In contrast, with respect to history, in this top screen 400, history is displayed as a category denoted as "usage status" (usage status button) 407. In addition, as described later, history is displayed by being divided into a plurality of categories in a screen separate from the top screen 400.

Each area in which parts life 403, fault detection 404, errors 405, and jams 406 are displayed is a notification area that displays (notifies) information related to abnormalities occurring in the image processing apparatus 103. These notification areas include buttons for transitioning to detail screens, and for example, the entire notification area serves as an operation region that accepts operations from users.

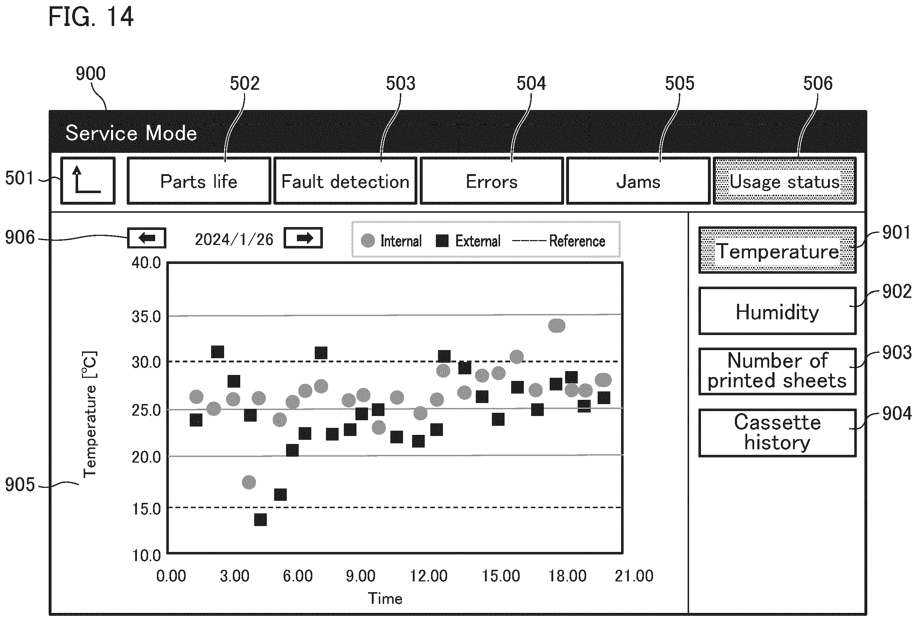

Although the usage status button 407 is an operation region that accepts operations from users, the usage status button 407 does not have a notification area. The usage status button 407 includes a function that accepts operations for displaying usage status (history information) divided into a plurality of categories, as described later (FIG. 14 to FIG. 17). In addition, with respect to usage status, predetermined criteria for determining abnormalities may be established, and a configuration may be adopted wherein information related to those abnormalities is notified in the top screen 400 similar to other notification areas.

Display information of information related to abnormalities displayed for each category, such as parts life 403, fault detection 404, errors 405, jams 406, and usage status button 407, is an example of first display information. In contrast, display information of icons displayed by being mapped on the cross-sectional diagram 401 is an example of second display information. In this manner, display contents based on both display information of each notification area (and the usage status button 407) and display information of icons on the cross-sectional diagram 401 (the legend 402 may be included) are displayed as a single screen that is the top screen 400.

Because display contents that can be displayed in each notification area are restricted by the screen region, abnormalities are displayed from the top in order starting from abnormalities having high priority, and in a case in which all abnormalities cannot be displayed, the number of remaining abnormalities is displayed as "Other". That is, among information related to abnormalities, one or more display targets of a predetermined number and one or more non-display targets that cannot be fully displayed in this single screen are displayed together. With respect to non-display targets, only the number thereof is displayed. Although the predetermined number of display targets is, for example, two or three, the predetermined number of display targets may be one, or may be four or more. In contrast, both icons showing display targets and icons showing non-display targets are displayed on the cross-sectional diagram 401.

In addition, in the top screen 400, among information related to abnormalities, information of abnormalities for which locations in the image processing apparatus 103 cannot be specified and are not displayed on the cross-sectional diagram 401 may also be displayed. Information of abnormalities for which locations in the image processing apparatus 103 cannot be specified includes, for example, system errors and the like. Such information of abnormalities for which locations cannot be specified may be notified as a category of errors 405, or may be notified as another category, that is, a different category not explained here.

Priority is set for information related to abnormalities, and an order of priority is predetermined. Information related to abnormalities includes, for example, abnormalities requiring action and abnormalities for which action is recommended. Priority of abnormalities requiring action is set higher than priority of abnormalities for which action is recommended. For example, with respect to priority of parts life 403, "replacement necessary" is set higher than "replacement recommended", and in a case in which levels are the same, the order follows an arrangement order of the parts life screen described later.

With respect to priority of fault detection 404, "check necessary" is set higher than "check recommended", and in a case in which levels are the same, the order follows an arrangement order of the fault detection screen described later.

Errors 405 displays errors that are occurring in descending order of occurrence date and time. With respect to errors 405, although the priority order may be set to descending order of occurrence date and time in this manner, the priority order may also be set to ascending order of occurrence date and time. Alternatively, priority order may be set according to other criteria.

With respect to priority of jams 406, "jam occurring" (abnormality requiring action) is set higher than "frequent jams" (abnormality for which action is recommended), and in a case in which levels are the same, similar to the jam screen described later, display is in descending order of occurrence date and time. In addition, priority of information related to abnormalities in each category may be set in three or more stages.

Parts life 403, in the example of FIG. 4, shows by icons corresponding to the legend 402, that replacement of drum unit Y is necessary and that replacement timing is approaching (replacement recommended) for drum unit M and drum unit C. That is, icon images differ according to priority. In addition, parts life 403 shows in "Other" that there is one part for which life limit, that is, usage limit, is approaching. When the notification area of parts life 403 (or the band-shaped button marked "Parts Life" at the top of that notification area) is pressed, transition is made to the parts life screen described later.

In a case in which a plurality of pieces of information related to abnormalities corresponding to the same location on the cross-sectional diagram 401 exist as information related to abnormalities, an icon corresponding to an abnormality having high priority (having highest priority) is displayed.

In the example of FIG. 4, fault detection 404 shows by icons that there are two check necessary cases and one check recommended case. When the notification area of fault detection 404 or the button at the top portion of that notification area is pressed, transition is made to the fault detection screen described later.

In the example of FIG. 4, errors 405 shows by icons that there are two errors occurring. No icons are displayed in errors 405 because many system-related errors cannot be determined at specific positions on the cross-sectional diagram. When the notification area of errors 405 or the button at the top portion of that notification area is pressed, transition is made to the error screen described later.

In the example of FIG. 4, jams 406 shows by icons that there is one jam occurring, one frequently occurring jam location, and two other notifications. When the notification area of jams 406 or the button at the top portion of that notification area is pressed, transition is made to the jam screen described later.

A usage status button 407 is a button for transitioning to the usage status screen described later.

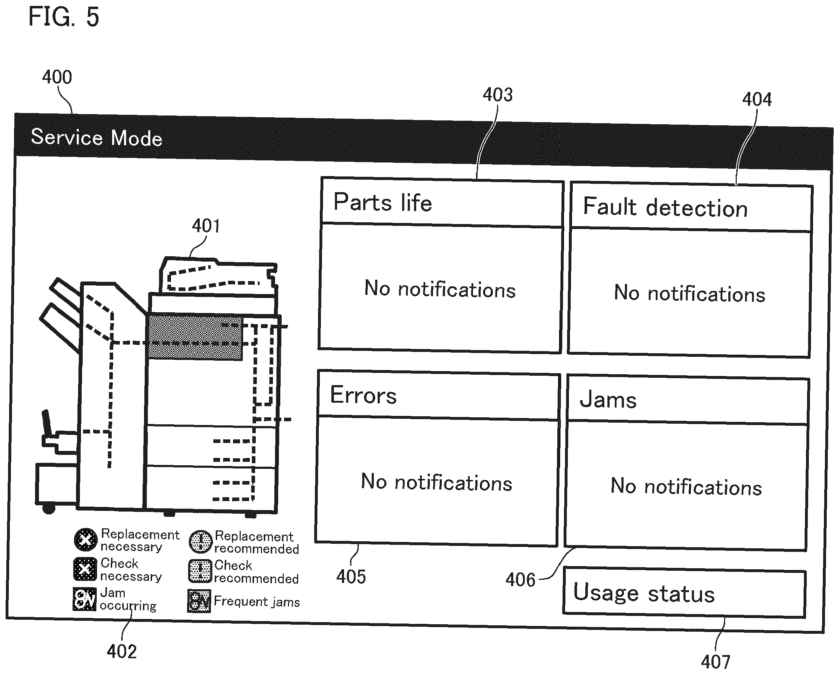

FIG. 5 is a diagram showing an example of the top screen 400 in a case in which no abnormality exists in the image processing apparatus 103. Because no abnormality exists, no icons of the legend 402 are displayed on the cross-sectional diagram 401. "No notifications" is displayed in each notification area (403 to 406), and a service person can recognize at a glance that no abnormality exists. In this manner, because the service person can obtain presence or absence of abnormalities of the entire image processing apparatus or occurrence locations of abnormalities and contents thereof from the top screen 400, the service person can identify locations that should be handled promptly and can immediately begin work. In addition, the service person can consider efficient work procedures such as collectively handling abnormalities at locations that are close to each other on the cross-sectional diagram 401.

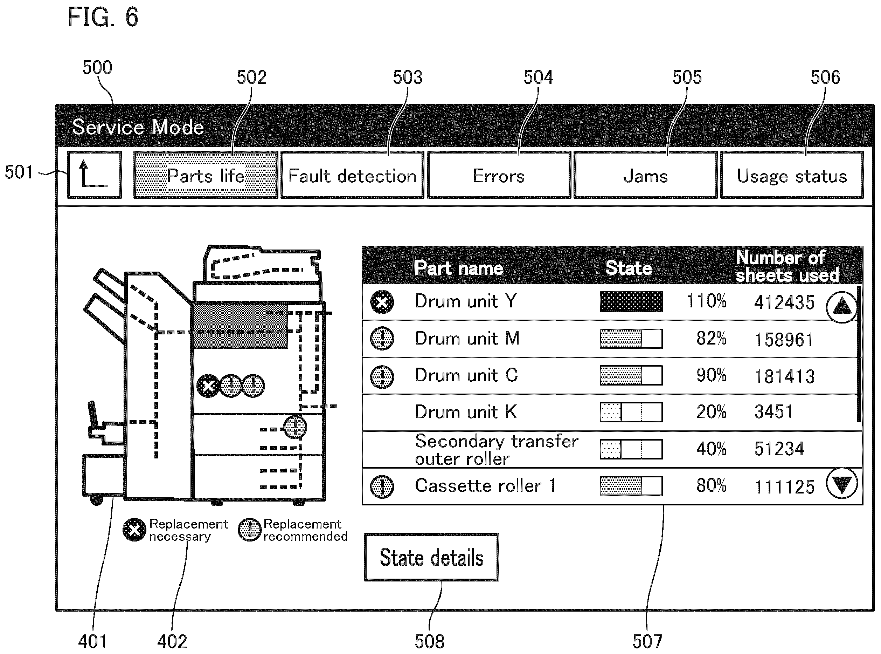

FIG. 6 is a diagram showing a parts life screen 500 that is displayed by pressing parts life 403 of the top screen 400 described above. At the top portion of the screen, a return button 501, a parts life button 502, a fault detection button 503, an error button 504, a jam button 505, and a usage status button 506 are displayed as buttons for switching screens. The return button 501 is a button for returning to the top screen. When the fault detection button 503, the error button 504, the jam button 505, or the usage status button 506 is pressed, transition occurs to each detail screen. Because these buttons 501 to 506 are also displayed in each detail screen described later, a service person can easily move back and forth between each detail screen. Accordingly, work of estimating causes of abnormalities by comparing information displayed in each screen becomes easier.

Although the parts life screen 500 also displays the cross-sectional diagram 401 and the legend 402, the screen displays icons limited to parts as icons to be displayed.

A parts list 507 displays a list showing states of replacement parts. Each column of the parts list 507 displays a "part name" of parts, a "state", and a "number of sheets used" indicating sheets of paper that have passed through (used) after replacement of parts. Here, to note for certainty, the state of parts is not a concept that completely matches "state information" that is managed and displayed divided for each category described above, and the state of parts refers to information of states of parts among that overall state information.

In the parts list 507, "state" is displayed as icons of four-stage level meters according to state values of parts. For example, level meters icons display "0" showing an undefined state immediately after parts replacement, level "1" for state values of 0 to 79%, level "2" for 80 to 99%, and level "3" for 100% or more. In addition, current state values are also displayed numerically to the right of the level meters. These state values are preset such that values increase as deterioration of parts progresses and values at which replacement becomes necessary become 100%. Parameters used for calculation of state values include, for example, number of sheets used after replacement, and current values and resistance values of each part, and the like.

In a case in which a level of state values is "2", an icon for replacement recommendation is displayed at the left end of the list, showing that usage limit of corresponding parts is approaching. In the example of FIG. 6, "drum unit M", "drum unit C", and "cassette roller 1" are in states for which replacement is recommended. In a case in which a level of state values is "3", an icon for replacement necessary is displayed at the left side of the list, showing that corresponding parts have reached usage limit. In the example of FIG. 6, "drum unit Y" is in a state for which replacement is necessary.

In a case in which a service person replaces parts, state values of replaced parts return once to level "0" indicating no data by detecting replacement of the parts. Therefore, icons for replacement necessary or replacement recommended of replaced parts become not displayed from the cross-sectional diagram 401 and the parts list 507. Unlike the notification area of parts life 403 of the top screen 400, the parts list 507 displays all parts that the service person manages regardless of presence or absence of abnormalities. Accordingly, state values of parts for which replacement is not yet necessary can also be confirmed. The parts list 507 can display states of all parts by being scrolled up and down.

A state details button 508 is a button for transitioning to a screen that displays in graph form the state value transitions of parts selected in the parts list 507.

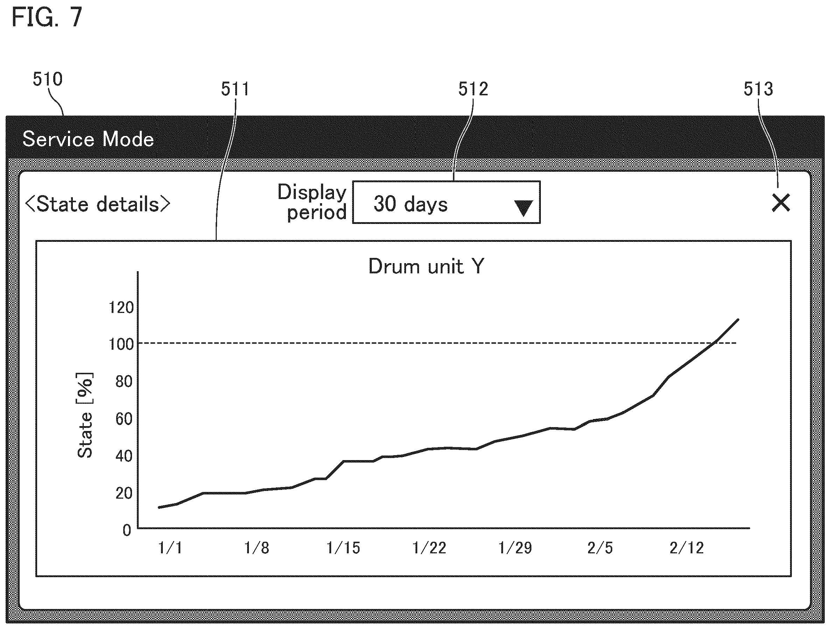

FIG. 7 shows the state details screen 510 that is displayed by pressing the state details button 508. A state transition graph 511 shows daily transitions of state values of selected parts. A reference line is displayed at 100%, indicating when parts replacement becomes necessary. A display period 512 is a pull-down menu for switching the display period of the graph between 30 days and 180 days. The display period 512 is not limited to 30 days and 180 days. A close button 513 serves as a button for closing the state details screen 510 and returning to the parts life screen 500.

In the example of FIG. 7, the state transition graph 511 of "drum unit Y" of the parts life screen 500 is shown, and daily transitions up to reaching a state value exceeding 100% can be seen. Thereby, a service person can estimate whether deterioration progressed as assumed, or whether deterioration of parts progressed rapidly due to part defects or environmental changes. Although the example of FIG. 7 shows an example in which state values exceeded usage limit of parts, in a case of parts that have not yet reached usage limit, the service person can predict from slope of the graph in approximately how many days parts will reach usage limit. Thereby, the service person can determine whether parts for replacement should be brought at the next visit and can prepare replacement parts.

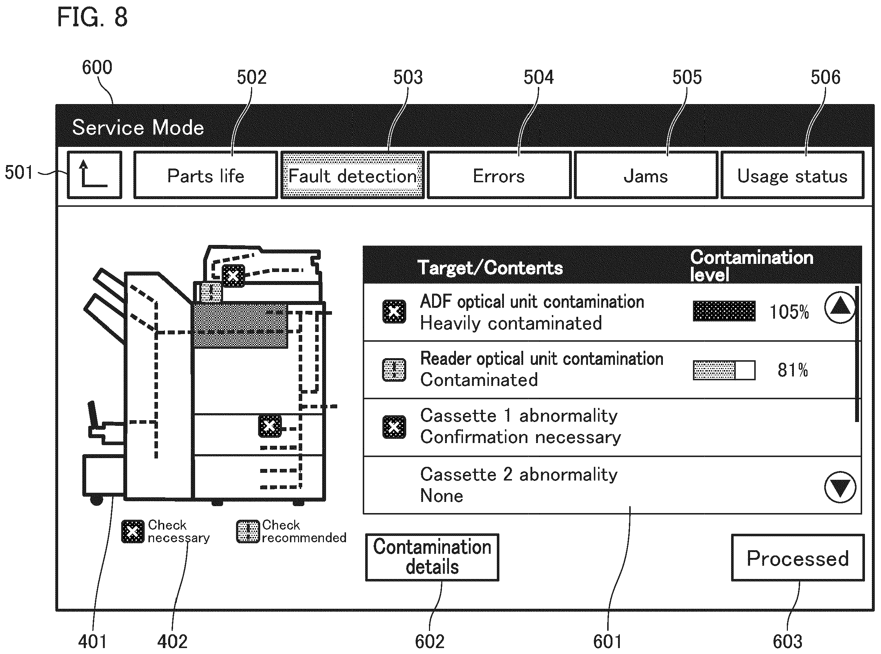

FIG. 8 is a diagram showing a fault detection screen 600 that is displayed by pressing fault detection 404 of the top screen 400, or by pressing the fault detection button 503 of each detail screen. Buttons 501 to 506 arranged at the top portion of the screen have functions similar to buttons 501 to 506 shown in FIG. 6.

Although the fault detection screen 600 also displays the cross-sectional diagram 401 and the legend 402, the icons displayed on this screen are limited to those indicating whether fault checking is necessary.

A fault list 601 displays a list showing fault targets that frequently require handling by a service person and content thereof. "ADF optical unit contamination" and "reader optical unit contamination" display information indicating whether measures for cleaning optical units are necessary. ADF is an abbreviation for Automatic Document Feeder. For example, contamination level of mirrors is detected from values of reflected light of mirrors acquired by optical sensors and the like. Similar to state values and state levels of parts life described above, a contamination degree [%], for which a reference value at which cleaning becomes necessary is set to 100%, and a contamination level, which comprises icons of four-stage level meters according to contamination level, are displayed. Based on this contamination level or contamination level meter, information of whether measures are necessary is displayed.

Specifically, for example, in a case in which contamination level is undefined, an icon of level "0" is displayed. In a case in which contamination level is 0 to 79%, an icon of level "1" is displayed. In a case in which contamination level is 80 to 99%, an icon of level "2" is displayed. In a case in which contamination level is 100% or higher, an icon of level "3" is displayed. In a case in which contamination level is level "2", a check recommended icon showing that cleaning is recommended is displayed at the left end of the list. In a case in which contamination level is level "3", a check necessary icon showing that cleaning is essential is displayed at the left end of the list.

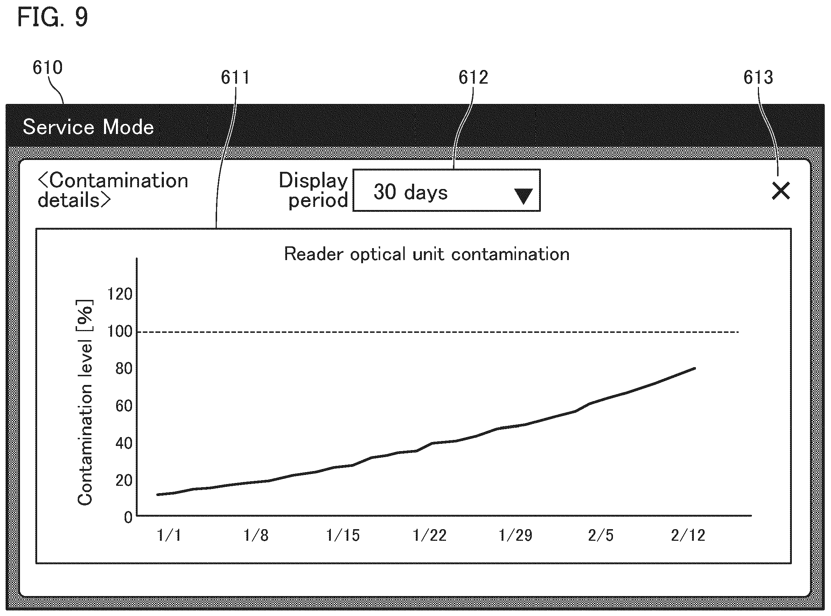

In addition, messages related to targets/contents in the fault list 601 change according to levels. For example, level "0" displays "No data", level "1" displays "Good", level "2" displays "Contaminated", and level "3" displays "Heavily contaminated". With respect to contamination of optical units, one target among the fault list 601 is selected, and by pressing the contamination details button 602, a graph showing transitions of contamination level (explained later in FIG. 9) can be confirmed.

In the fault list 601, cassette abnormalities display whether abnormalities exist in each cassette and contents thereof. Abnormalities in cassettes are determined mainly in a case in which misalignment of regulation plates (guides) of paper in cassettes is detected. The list displays a message "Confirmation necessary" in a case in which cassette abnormalities exist, and displays a message "None" in a case in which no abnormalities exist.

The processed button 603 is a pressable button in a case in which optical units or cassettes are in a "check necessary" or "check recommended" state. In a case in which a service person presses the processed button 603 by selecting a target optical unit among the fault list 601 after cleaning the optical unit, the contamination level returns to "0". As a result, "check necessary" or "check recommended" icons become not displayed from the cross-sectional diagram 401 and the fault list 601. In addition, in a case in which the service person presses the processed button 603 by selecting a target cassette among the fault list 601 after confirming the cassette, display returns to no abnormalities. As a result, "check necessary" icons become not displayed from the cross-sectional diagram 401 and the fault list 601.

FIG. 9 is a diagram showing a contamination details screen 610 that is displayed by pressing the contamination details button 602 with respect to optical units. A contamination transition graph 611 shows daily transitions of contamination level of target optical units selected in the fault list 601. A reference line is displayed at 100%, indicating when cleaning becomes necessary. A display period 612 is a pull-down menu for switching the display period of the graph between 30 days and 180 days. A close button 613 is a button for closing the contamination details screen 610 and returning to the fault detection screen 600.

In the example of FIG. 9, the contamination transition graph 611 of "reader optical unit contamination" of the fault detection screen 600 is shown, and daily transitions up to reaching check recommended at contamination level of 81% can be seen. From the slope of this graph, a service person can predict approximately how many days until cleaning becomes essential. By this, a service person can determine whether cleaning tools should be brought at the next visit and can prepare the necessary cleaning tools.

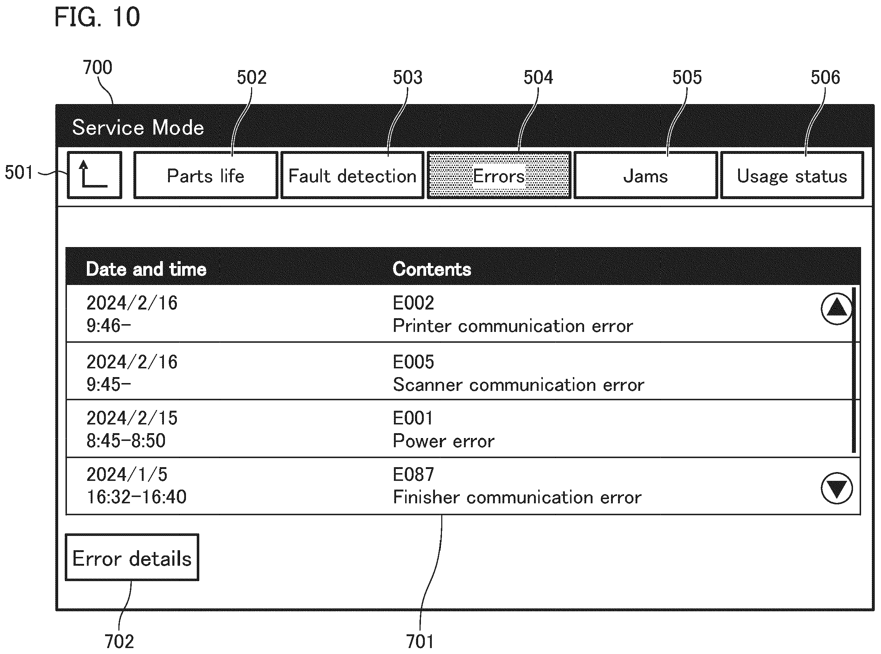

FIG. 10 is a diagram showing an error screen 700 that is displayed by pressing errors 405 of the top screen 400, or by pressing the error button 504 of each detail screen. Buttons 501 to 506 arranged at the top portion of the screen have functions similar to buttons 501 to 506 shown in FIG. 6 and FIG. 8.

An error list 701 displays a list of error history occurring in the image processing apparatus 103. The error list 701 displays occurrence date, occurrence time, and recovery time for each error, and displays error codes and titles thereof as contents. Errors in the first and second lines for which no recovery time is displayed indicate errors that are currently occurring. For example, by selecting one target among the error list 701 and pressing an error details button 702, detailed information of the selected target error can be confirmed.

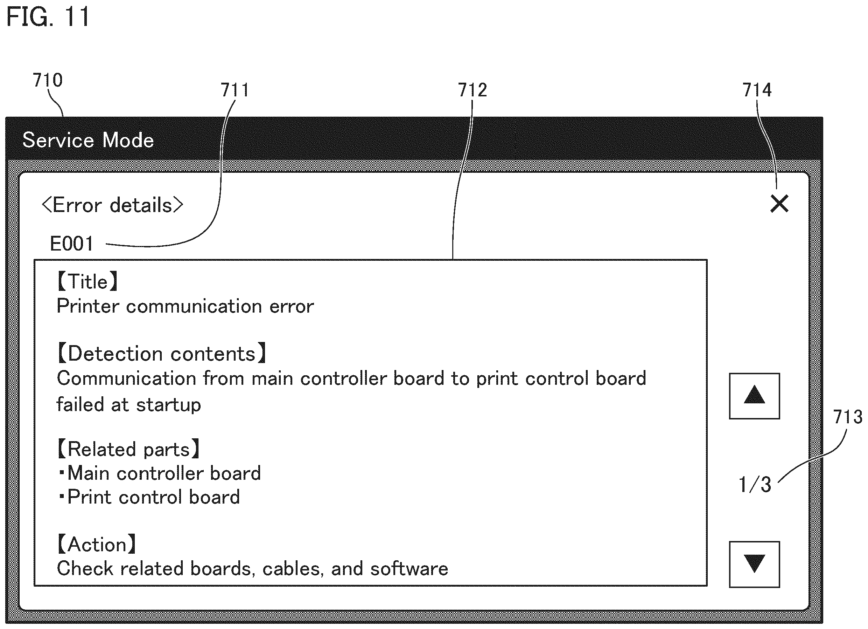

FIG. 11 is a diagram showing an error details screen 710 that is displayed by pressing the error details button 702. An error code 711 shows an error code identifying the selected error. Error information 712 displays titles, explanations, and handling methods of errors. A page turning button 713 is a button for switching pages in a case in which error information includes a plurality of pages. A close button 714 serves as a button for closing the error details screen 710 and returning to the error screen 700. A service person can confirm currently occurring errors and contents thereof from this screen.

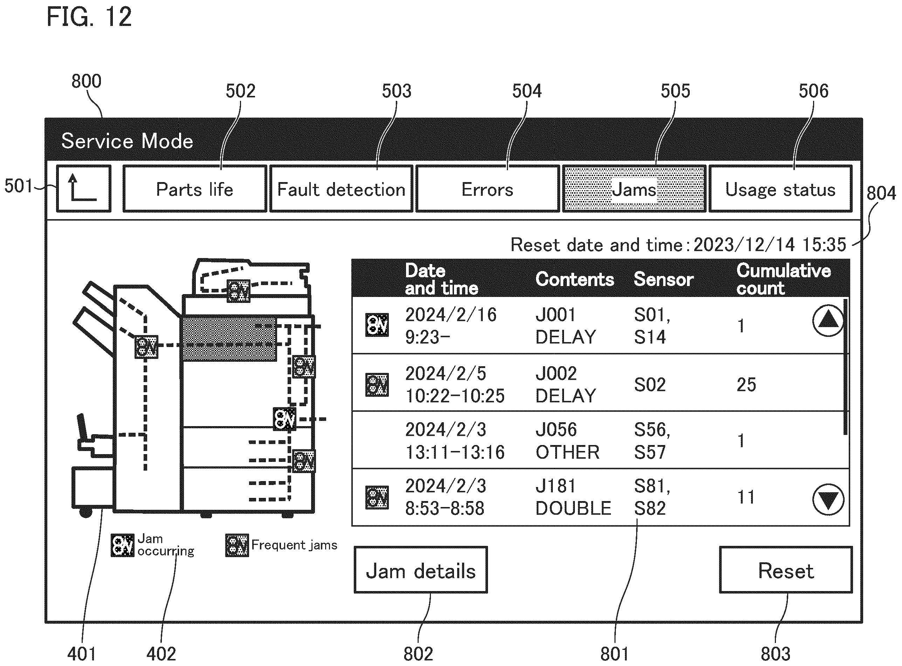

FIG. 12 is a diagram showing a jam screen 800 that is displayed by pressing jams 406 of the top screen 400, or by pressing the jam button 505 of each detail screen. Buttons 501 to 506 arranged at the top portion of the screen have functions similar to buttons 501 to 506 shown in FIG. 6, FIG. 8, and FIG. 10.

Although the jam screen 800 also displays the cross-sectional diagram 401 and the legend 402, the icons displayed are restricted solely to those indicating either a currently occurring jam or a frequently occurring jam.

A jam list 801 displays a list of jam history. The jam list 801 displays occurrence date, occurrence time, and recovery time for each jam, and displays jam codes, jam types, sensor numbers, and cumulative numbers of the same jam codes as contents. A jam in the first line for which no recovery time is displayed indicates a jam that is currently occurring, and an icon showing a jam occurring is displayed at the left end of the jam list 801. Jams occurring a predetermined number of times or more, such as jam history in the second and fourth lines, are determined to be frequently occurring jams, and icons of frequently occurring jams are displayed at the left end of the list. In the example of FIG. 12, jams occurring ten times or more are determined to be frequently occurring jams. In a case in which a plurality of histories of the same jam code exist, only the most recent jam code history record is displayed in the list. Thereby, types of jams that have occurred become easier to grasp. By selecting one target among the jam list 801 and pressing a jam details button 802, detailed information of the selected target jam can be confirmed.

A reset button 803 is a button for clearing displayed jam history. A service person uses the reset button 803 in a case in which they wish to delete notifications by completing confirmation of currently occurring or frequently occurring jams. When the reset button 803 is pressed, a reset date and time 804 is updated, and the jam list 801 displays jam history after the reset date and time 804.

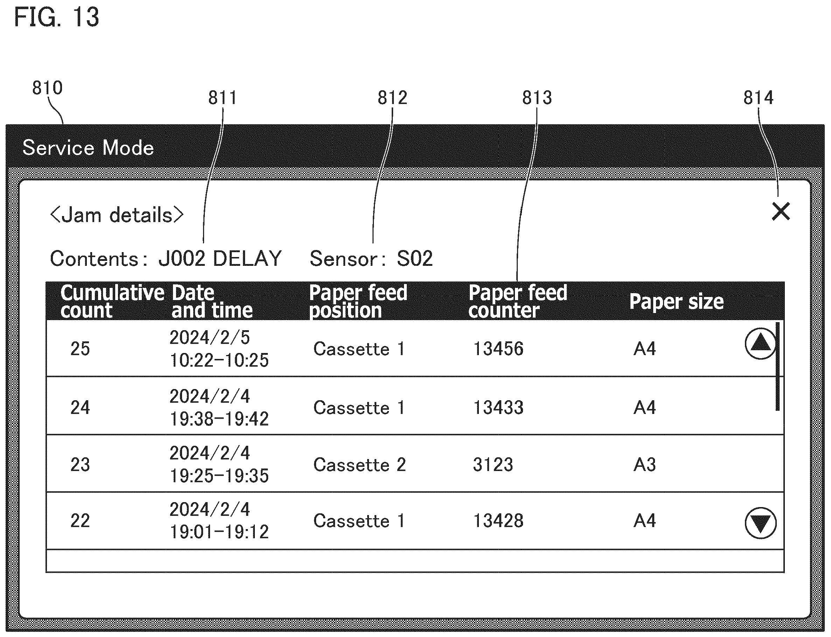

FIG. 13 is a diagram showing a jam details screen 810 that is displayed by pressing the jam details button 802. Jam contents 811 displays jam codes and jam types of target jams selected in the jam list 801. A sensor number 812 displays sensor numbers related to jam codes and jam occurrence locations.

A jam details list 813 displays history of jams having the same jam contents 811 (that is, jam codes and jam types) in descending order of time series. The jam details list 813 displays cumulative numbers, occurrence dates, occurrence times, recovery times, paper feed positions, paper feed counters, and paper feed sizes. Paper feed positions are positions of paper when jams occurred. Numbers shown by "paper feed counters" are numbers of sheets fed from paper feed positions when jams occurred. Paper feed sizes are sizes of supplied paper. Although the jam list 801 of FIG. 12 made jam variations easier to see by displaying only the most recent entry for each jam code, the jam details list 813 of FIG. 13 makes frequencies of occurrence of the same jams easier to see. In a case in which the number of entries is large, the jam details list 813 can be scrolled up and down.

A close button 814 is a button for returning to the jam screen 800 by closing the jam details screen 810. Because a service person can know not only currently occurring jams but also locations at which past jams frequently occurred and frequencies thereof, the service person can consider cleaning or replacement of surrounding parts with respect to locations at which jams are occurring or frequently occurring.

FIG. 14 to FIG. 17 are diagrams each showing a usage status screen 900 that is displayed by pressing the usage status button 407 of the top screen 400, or by pressing the usage status button 506 of each detail screen. At the right end of the usage status screen 900, a temperature button 901, a humidity button 902, a number of printed sheets button 903, and a cassette history button 904 for transitioning to each screen of usage status are displayed. Because these buttons 901 to 904 are displayed in each usage status screen 900 shown in FIG. 14 to FIG. 17, a service person can easily move back and forth between each usage status screen 900. In addition, by using the return button 501 to usage status button 506 described above, a service person can easily move back and forth between the parts life screen 500, the fault detection screen 600, the error screen 700, the jam screen 800, and the usage status screen 900. Accordingly, a service person can easily compare those abnormality information and usage status, and can easily estimate causes of abnormalities.

FIG. 14 is a diagram showing a temperature change screen that is displayed by pressing the temperature button 901 of the usage status screen 900. A temperature change graph 905 represents temperature (°C) on the vertical axis and time on the horizontal axis, and shows a full 24-hour period of temperatures inside the image processing apparatus (internal)/outside the image processing apparatus (external) at 10-minute intervals. A date switching button 906 is a button for switching dates of displayed graphs. By pressing the date switching button 906 and selecting a date, data up to one month prior can be displayed.

Upper and lower limits are displayed by dotted lines as reference ranges of temperature in the temperature change graph 905, and in a case in which temperatures outside the reference range are shown, it can be determined that environment review is necessary. In addition, a service person can confirm whether temperature changes are factors in errors or jams by comparing periods of the temperature change screen of FIG. 14 that are the same as periods in which jams are occurring in, for example, the error screen 700 of FIG. 10 or the jam screen 800 of FIG. 12.

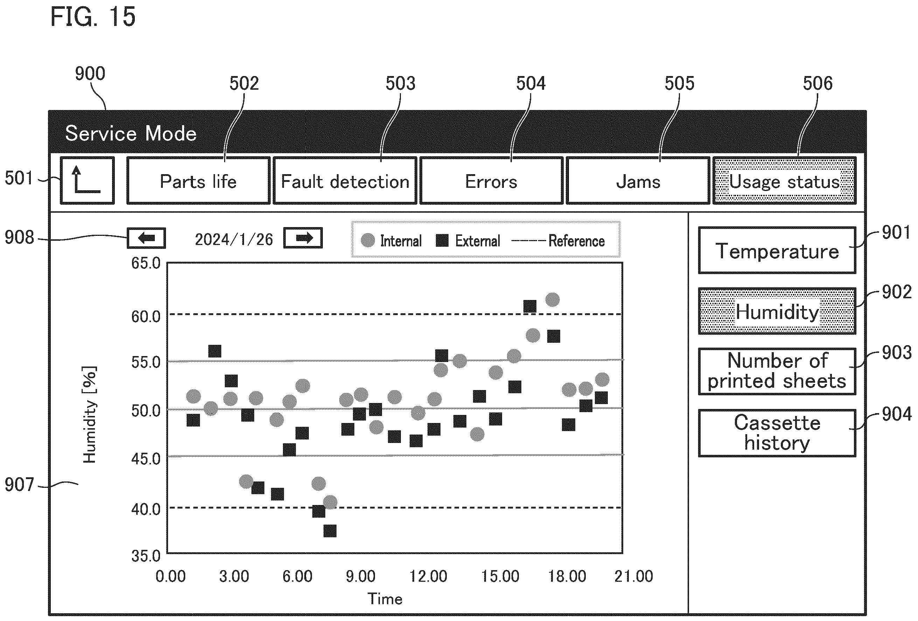

FIG. 15 is a diagram showing a humidity change screen that is displayed by pressing the humidity button 902 of the usage status screen 900. A humidity change graph 907 represents humidity (%) on the vertical axis and time on the horizontal axis, and shows one day of internal/external humidity at 10-minute intervals. A date switching button 908 is a button for switching dates of displayed graphs, and enables display of data up to one month prior.

Upper and lower limits are displayed by dotted lines as reference ranges of humidity in the humidity change graph 907, and in a case in which humidity outside the reference range is shown, it can be determined that environment review is necessary. In addition, a service person can confirm whether humidity changes are factors in jams by comparing periods of the humidity change screen of FIG. 15 that are the same as periods in which jams are occurring in, for example, the jam screen 800 of FIG. 12.

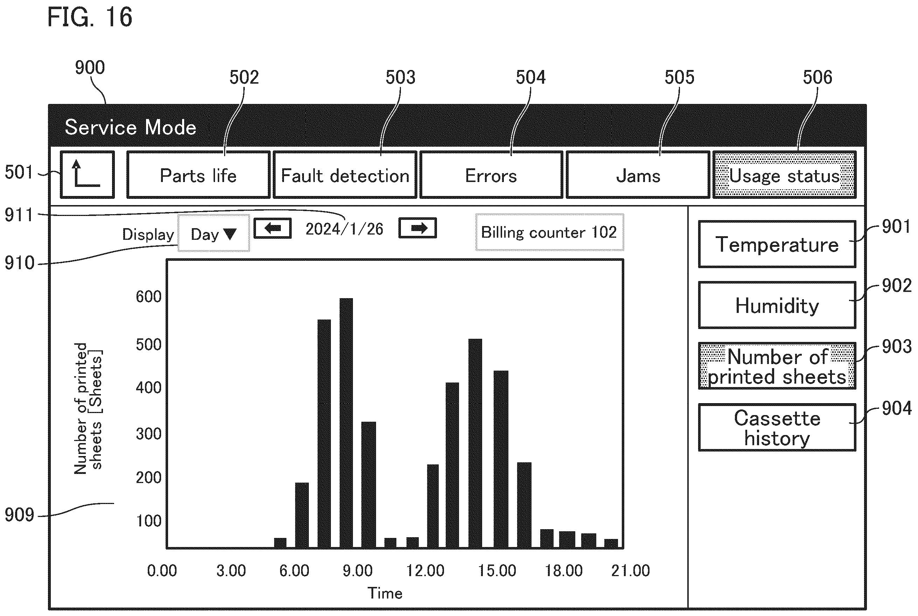

FIG. 16 is a diagram showing a number of printed sheets screen that is displayed by pressing the number of printed sheets button 903 of the usage status screen 900. A number of printed sheets graph 909 represents number of printed sheets (sheets) on the vertical axis and time on the horizontal axis.

A display period switching button 910 is a button for performing changes to units of the graph display period to one month or one day. A date switching button 911 serves as a button for switching graph display dates. In a case in which "month" is selected by the display period switching button 910, data for one month at one-day intervals is displayed, and data for each month is displayed by selection using the date switching button 911. In addition, in this case, year and month are displayed in the date switching button 911, and the horizontal axis of the number of printed sheets graph 909 is displayed in units of days (rather than "time" (time of day) as shown in the example of FIG. 16).

In contrast, in a case in which "day" is selected by the display period switching button 910, as shown in the example of FIG. 16, data for one day is displayed at one-hour intervals, and by selection using the date switching button, data for each day is switched and displayed. In this case, year, month, and day are displayed in the date switching button 911, and the horizontal axis of the number of printed sheets graph 909 is displayed in units of time (time of day).

For example, in a case in which it is estimated that parts will reach usage limit earlier than scheduled in the parts life screen 500 of FIG. 6, the following estimation becomes possible. That is, in a case in which a service person confirms from the number of printed sheets graph 909 of FIG. 16 that a large amount of printing was performed immediately before the usage limit, the service person can estimate that the large amount of printing may be a possible cause of the above-described parts reaching usage limit earlier.

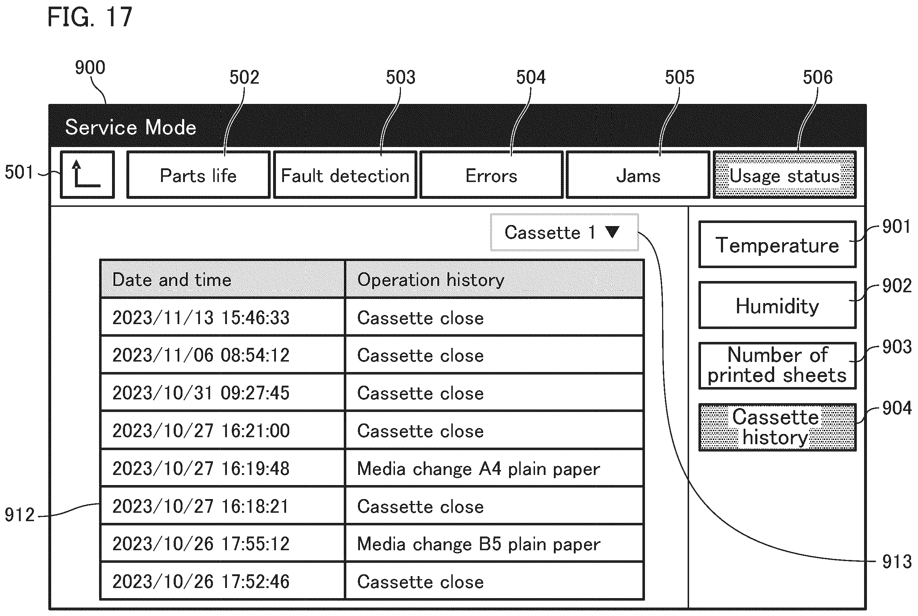

FIG. 17 is a diagram showing a cassette history screen that is displayed by pressing the cassette history button 904 of the usage status screen 900. A cassette history list 912 displays operation history of cassettes in time series. A cassette switching button 913 is a button for selecting target cassettes displayed in the cassette history list 912. For example, in a case in which jams or errors are occurring, a service person can consider the following by confirming cassette history in the cassette history list 912. That is, the service person can consider by distinguishing whether operations or setting mistakes by users using the image processing apparatus are factors in those jams or errors, or whether failures are due to other factors rather than operations or setting mistakes by users.

### <Configuration of History Data>

Next, data recorded in the history management unit 304 that manages data displayed in the above-described state monitor screens will be explained. The history management unit 304 organizes values and settings acquired from the various sensors 255, the scanner 270, and/or the printer 295 via the device I/F 220 of FIG. 2 into necessary information, and stores the information in the HDD 204 or the RAM 202. It should be noted that "history data" referred to here means data of both histories of "state information (parts life, fault detection, errors, jams)" and "history information (usage status)".

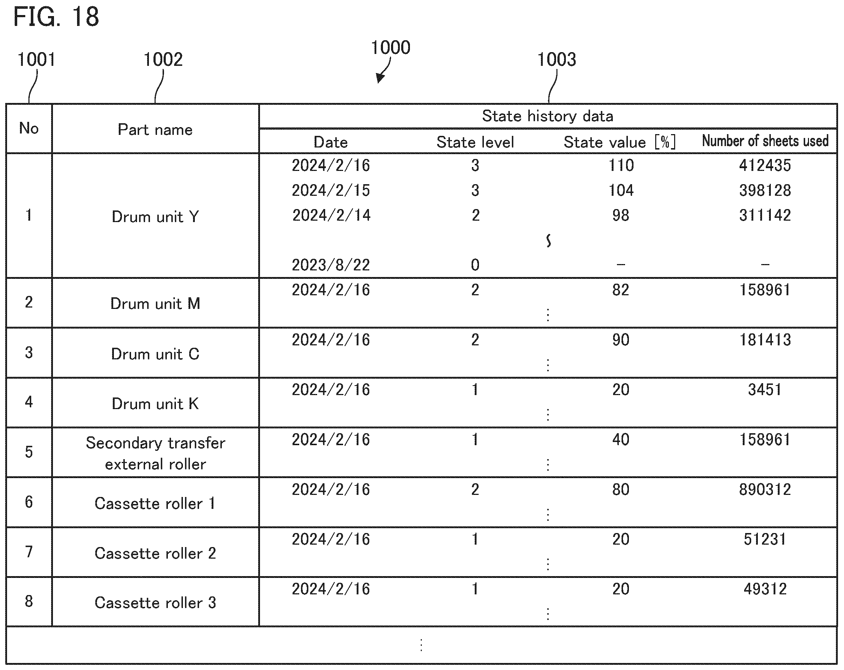

FIG. 18 shows history data 1000 used for displaying information of parts life. This history data 1000 includes numbers (No.) 1001, part names 1002, and history data 1003 of states of parts. Numbers 1001 show arrangement order of parts in this history data. History data 1003 of states includes, for example, dates at which data was acquired, state levels of parts, state values [%], and numbers of sheets used. History data 1003 of states is stored daily. State levels, state values, and numbers of sheets used are as described above in the explanation of the parts list 507 of FIG. 6.

In history data 1003 of states, parts having state level "3" are displayed in the cross-sectional diagram 401 and parts life 403 of FIG. 4 as parts requiring replacement. Parts having state level "2" are displayed in the cross-sectional diagram 401 and parts life 403 of FIG. 4 as parts recommended for replacement. All parts shown by part names 1002 and states thereof are displayed in the parts list 507 of FIG. 6 in the arrangement order of numbers 1001. In addition, history data 1003 of states is used for displaying the state transition graph 511 of FIG. 7. Because display periods include 30 days and 180 days, data for at least 180 days is retained. In a case in which replacement of parts by a service person is detected, state levels of replaced parts become "0". State level "0" means a state in which values are undefined after parts replacement. In addition, at that time, no data exists for state values [%] and numbers of sheets used. In this manner, parts life history data of FIG. 18 is used for parts life display of each screen.

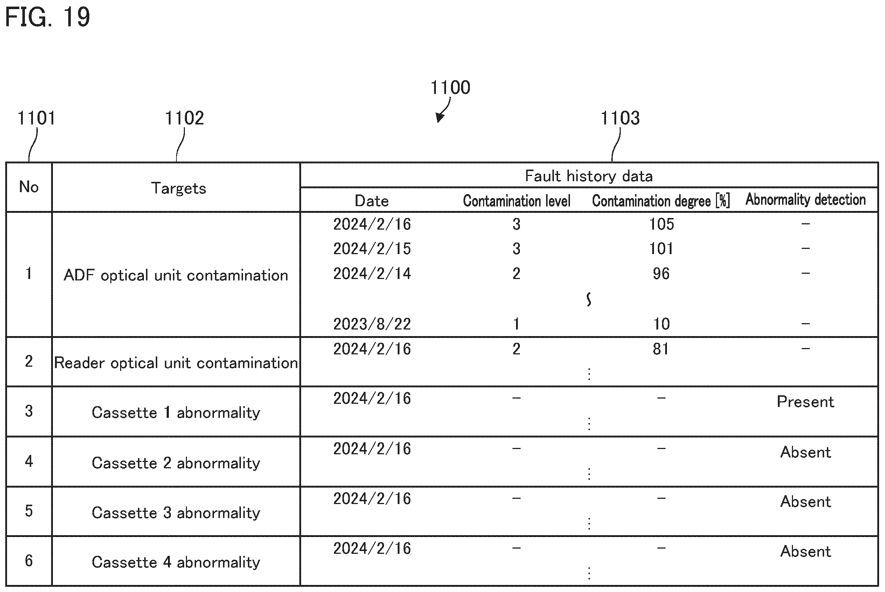

FIG. 19 shows history data 1100 used for displaying information of fault detection. This history data 1100 includes numbers (No.) 1101, targets 1102, and history data 1103 of faults. Numbers 1101 show arrangement order of faults in this history data 1100. Targets 1102 show names or contents of faults. History data 1103 of faults includes dates at which data was acquired, contamination levels, contamination degrees [%], and cassette abnormality detection. Contamination levels, contamination degrees [%], and cassette abnormality detection are as described above in the explanation of the fault list 601 of FIG. 8.

In a case of optical units, data includes dates at which data was acquired, contamination levels, and contamination degrees [%], and this data is stored daily. Optical units having contamination level "3" are displayed in the cross-sectional diagram 401 and fault detection 404 of FIG. 4 as faults requiring checking. Optical units having contamination level "2" are displayed in the cross-sectional diagram 401 and fault detection 404 of FIG. 4 as a fault for which checking is recommended. In addition, history data 1103 of faults related to optical units is used for displaying the contamination transition graph 611 of FIG. 9. Because display periods are 30 days and 180 days, data for at least 180 days is retained.

In a case of cassettes, history data 1103 of each fault includes dates at which data was acquired and presence or absence of abnormality detection, and this data are stored daily. Cassettes having abnormality detection "present" are displayed in the cross-sectional diagram 401 and fault detection 404 of FIG. 4 as faults requiring checking. All faults of targets 1102 and states thereof (contamination degree values and contamination levels) are displayed in the fault list 601 of FIG. 9 in the arrangement order of numbers 1101.

In a case in which a service person selects one target among the fault list 601 and presses the processed button 603 in FIG. 8, values related to states of the target fault are updated as follows. That is, in a case in which the target fault is contamination of an optical unit, the contamination level value becomes level "0", which is a state in which values are undefined. At that time, no data exists for contamination degree [%]. In a case in which the target fault relates to a cassette, abnormality detection is updated to "none". In this manner, history data of fault detection of FIG. 19 is used for fault detection display of each screen.

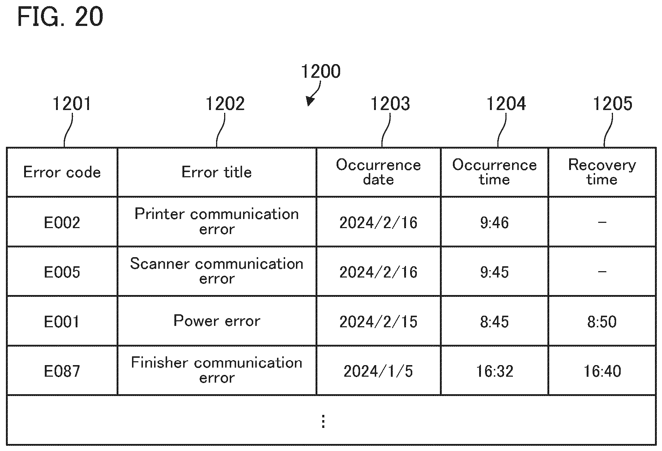

FIG. 20 shows history data 1200 used for displaying information of errors. This history data 1200 includes error codes 1201, error titles 1202, occurrence dates 1203, occurrence times 1204, and recovery times 1205. Error codes 1201 serve as codes for identifying errors. Occurrence dates 1203 are dates at which errors occurred, and occurrence times 1204 are times at which errors occurred. Recovery times 1205 are times at which errors were resolved. Errors for which recovery times 1205 are not recorded are displayed in errors 405 of FIG. 4 as errors that are occurring.

History data of FIG. 20 is displayed in the error list 701 of FIG. 10 in descending order of occurrence dates 1203 and occurrence times 1204. Although not shown in FIG. 20, contents corresponding to each error code of error codes 1201 are stored in HDD 204, and are displayed in the error details screen of FIG. 11. In this manner, error history data of FIG. 20 is used for error display of each screen.

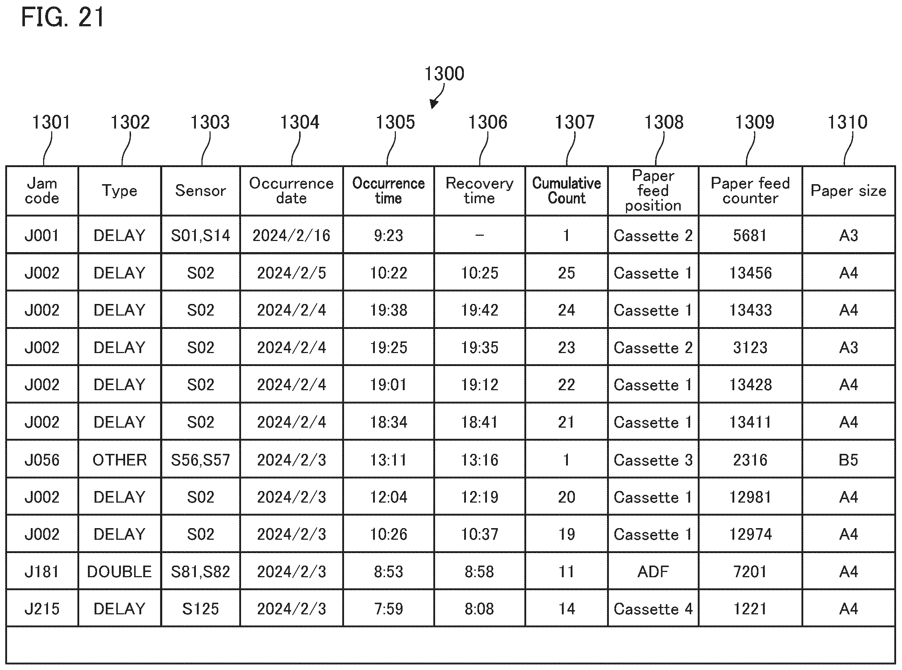

FIG. 21 shows history data 1300 used for displaying information of jams. This history data 1300 includes jam codes 1301, types 1302, sensors 1303, occurrence dates 1304, occurrence times 1305, recovery times 1306, cumulative numbers 1307, paper feed positions 1308, paper feed counters 1309, and paper feed sizes 1310.

Jam codes 1301 serve as codes for identifying jams. Types 1302 are jam types corresponding to jam codes. Types 1302 include various types such as DELAY (delay), in which paper is not detected by a sensor even after an expected time has elapsed, STNRY (stay/stagnation), in which paper detection by a sensor continues for longer than an expected time, DOUBLE (double-feeding), in which the ADF sensor detects double-feeding of paper, and the like. Sensors 1303 are sensor numbers that detected jams. Occurrence dates 1304 are dates at which jams occurred, and occurrence times 1305 are times at which jams occurred. Recovery times 1306 are times at which jams were resolved. Jams for which recovery times 1306 are not recorded are displayed in the cross-sectional diagram 401 and jams 406 of FIG. 4 as jams that are occurring.

Cumulative numbers 1307 are numbers of occurrences of jams having the same jam code. Numbers of jams occurring after the reset date and time 804 of FIG. 12 are counted up as these cumulative numbers. For example, in a case in which cumulative numbers have occurred a predetermined number of times (in this case, 10 times or more), jams are determined to be frequently occurring jams and are displayed in the cross-sectional diagram 401 and jams 406 of FIG. 4. Paper feed positions 1308 are positions from which paper at which jams occurred was supplied. Paper feed counters 1309 are numbers of sheets of paper supplied from paper feed positions.

History data 1300 of FIG. 21 is displayed in the jam list 801 of FIG. 12 in descending order of occurrence dates 1304 and occurrence times 1305. At that time, as described above, only the most recent instance among jams having the same jam code is displayed. History of the same jam code is displayed in the jam details screen of FIG. 13. It should be noted that, in a case in which the reset button 803 is pressed in FIG. 13, jam history prior to the pressed date and time is deleted. In this manner, jam history data of FIG. 21 is used for jam display of each screen.

It should be noted that each history data of FIG. 20 and FIG. 21 may also have sequential numbers such as numbers 1001 and 1101 shown in history data of FIG. 18 and FIG. 19.

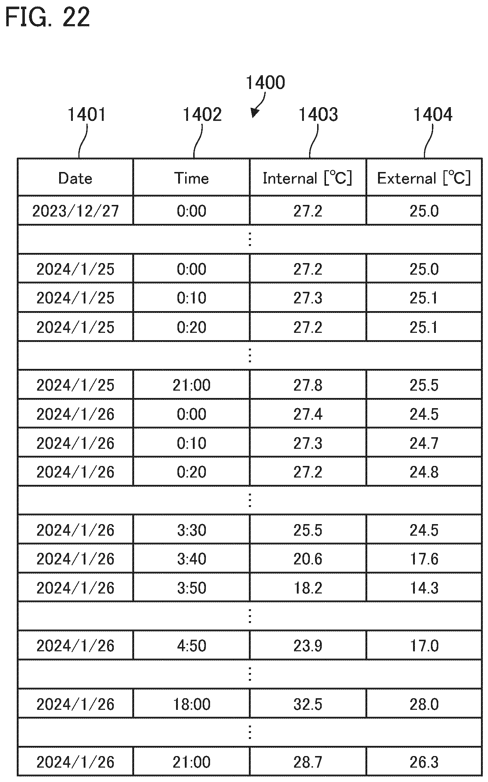

FIG. 22 to FIG. 25 each show data used for displaying information of usage status (temperature, humidity, number of printed sheets, and cassette history), this information serving as history information.

FIG. 22 shows temperature data 1400 used for displaying information of temperature changes. This data 1400 includes dates 1401, times 1402, internal 1403, and external 1404. Dates 1401 show dates at which temperature data was acquired, and for example, data for one month is stored. Times 1402 show times at which temperature data was acquired, and for example, data is stored at 10-minute intervals. In internal 1403, temperature data acquired by a thermometer installed inside the apparatus (not shown) is stored. In External 1404, temperature data acquired by a thermometer installed outside the apparatus (not shown) is stored. The data shown in FIG. 22 described above is used for display of the temperature change graph 905 of FIG. 14.

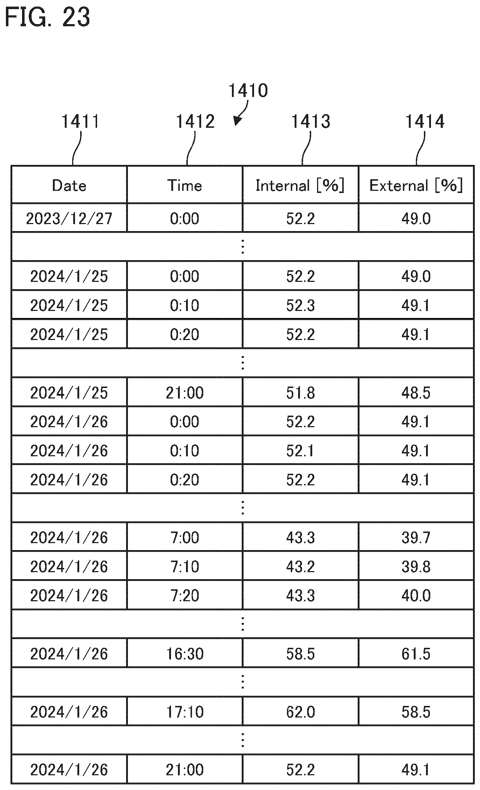

FIG. 23 shows humidity data 1410 used for displaying information of humidity changes. This data 1410 includes dates 1411, times 1412, internal 1413, and external 1414. Dates 1411 show dates at which humidity data was acquired, and for example, data for one month is stored. Times 1412 show times at which humidity data was acquired, and for example, data is stored at 10-minute intervals. In internal 1413, humidity data acquired by a hygrometer installed inside the apparatus (not shown) is stored. In external 1414, humidity data acquired by a hygrometer installed outside the apparatus (not shown) is stored. The data shown in FIG. 23 described above is used for display of the humidity change graph 907 of FIG. 15.

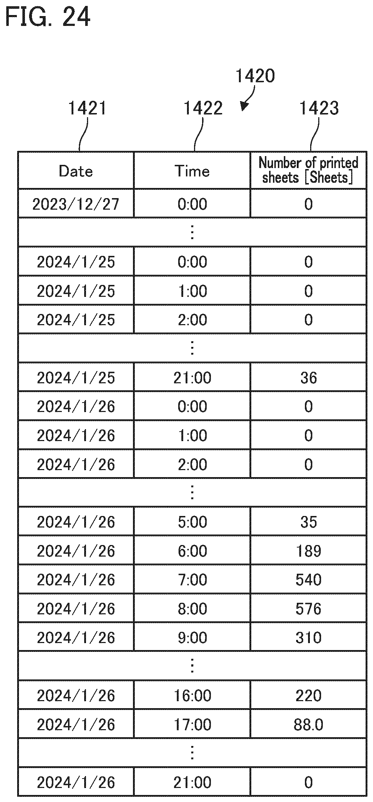

FIG. 24 shows printed sheets data 1420 used for displaying information of number of printed sheets. This data 1420 includes dates 1421, times 1422, and number of printed sheets 1423. Dates 1421 show dates at which number of printed sheets data was acquired. Times 1422 show times at which printed sheets data was acquired. Number of printed sheets 1423 show a number of sheets printed by the image processing apparatus 103. For example, each data of dates 1421, times 1422, and number of printed sheets 1423 for one month is stored at one-hour intervals. The data shown in FIG. 24 described above is used for display of the number of printed sheets graph 909 of FIG. 16.

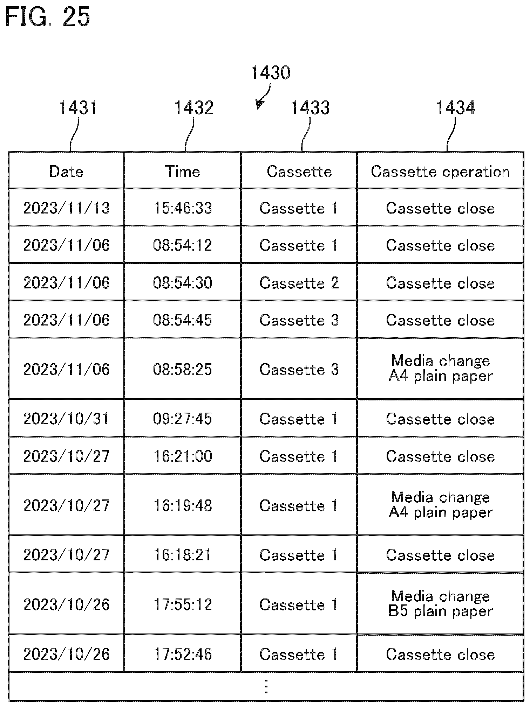

FIG. 25 shows cassette operation data 1430 used for displaying cassette history information. This data 1430 is data stored upon operations by users to close cassettes or operations to change media (that is, paper) with respect to cassettes of the image processing apparatus 103. This data includes dates 1431, times 1432, cassettes 1433, and cassette operations 1434. Dates 1431 show dates at which cassette operations were performed. Times 1432 show times at which cassette operations were performed. Cassettes 1433 show information of locations of cassettes that were operated. In cassette operations 1434, in a case in which operations to close cassettes are performed, information "cassette closed" is stored. In addition, in a case in which operations to change media are performed, "media change" and paper sizes and paper types after change are stored. For cassette history information, data of a predetermined number (for example, maximum 300) is stored. The data shown in FIG. 25 described above is used for display of the cassette history list 912 of FIG. 17.

It should be noted that cassette operation data need not be limited to cassettes, and operation data of manual feed trays may be stored.

### <Processing that the Image Processing Apparatus Executes>

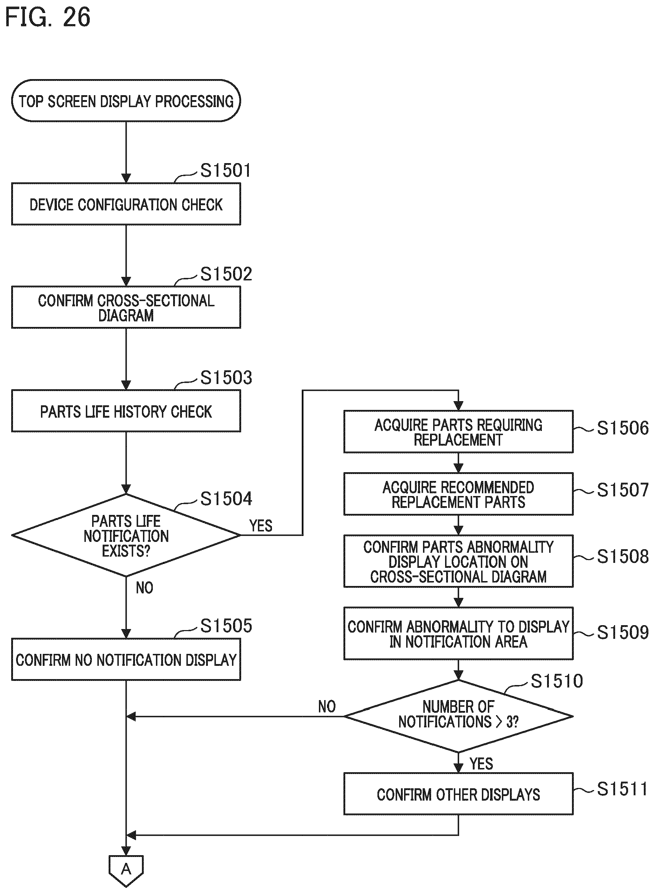

FIGS. 26 to 28 are flowcharts showing examples of display processing of a top screen (FIG. 4) that includes activation processing of a state monitor. A program (for example, firmware) for realizing this processing is stored in the HDD 204 of the image processing apparatus 103, and is loaded into the RAM 202 and executed by the CPU 201.

This processing is started based on the CPU 201 accepting input of a special command for activating the state monitor from a service person via the operation unit 212.

In step S1501, the CPU 201 refers to apparatus configuration information (not shown) of the image processing apparatus stored in the RAM 202.

In step S1502, the CPU 201 determines the cross-sectional diagram to be displayed in each screen. For example, the cross-sectional diagram to be displayed changes according to presence or absence of a scanner, presence or absence of a paper feed option, and presence or absence of a paper discharge option. In a case in which a common program operates between a plurality of image processing apparatuses, the CPU 201 may switch to a cross-sectional diagram suitable for that model according to model information. This is because positions of paper transport paths, parts, and jam sensors may differ depending on the model of the image processing apparatus.

In step S1503, the CPU 201 refers to history data 1000 of parts life shown in FIG. 18 that is stored in the HDD 204.

In step S1504, the CPU 201 determines whether parts having a state level of "2" or higher exist based on results of the reference in step S1503.

In a case in which the determination result of step S1504 is NO, in step S1505, the CPU 201 determines that no icons of parts life are to be displayed in the cross-sectional diagram 401 of FIG. 4, and that "No notifications" is to be displayed in the notification area of parts life 403. In a case in which the determination result is YES, in step S1506, the CPU 201 acquires information of parts requiring replacement having state level "3" from the history data of parts life.

In step S1507, the CPU 201 acquires information of parts recommended for replacement having state level "2" from the history data of parts life. The order of step S1506 and step S1507 may be reversed.

In step S1508, the CPU 201 displays icons of replacement necessary and/or replacement recommended for parts requiring notification acquired in step S1506 and step S1507 at corresponding coordinates on the cross-sectional diagram 401.

In step S1509, the CPU 201 displays parts requiring notification acquired in step S1506 and step S1507 in order starting from parts having high priority. As priority, replacement necessary (state level "3") is set higher than replacement recommended (state level "2"). In a case in which levels are the same, display is in order of number 1001 of FIG. 18.

In step S1510, the CPU 201 determines whether a number of parts that should be notified is greater than a number of parts that can be displayed in the notification area of parts life 403 (for example, three). In a case in which the determination result is NO, the processing proceeds to step S1512. In a case in which the determination result is YES, in step S1511, the CPU 201 displays notifications that cannot be fully displayed by the text "Other:" and a number thereof.

In step S1512, the CPU 201 refers to history data 1100 of fault detection shown in FIG. 19 stored in the HDD 204.

In step S1513, the CPU 201 determines whether faults having a contamination level of "2" or higher for optical units and/or cassette abnormalities exist based on results of the reference in step S1512.

In a case in which the determination result is NO, in step S1514, the CPU 201 determines that no icons of fault detection are to be displayed in the cross-sectional diagram 401 of FIG. 4, and that "No notifications" is to be displayed in the notification area of fault detection 404. In a case in which the determination result is YES, in step S1515, the CPU 201 acquires information of optical units having contamination level "3" and/or cassettes having abnormalities from the history data of fault detection.

In step S1516, the CPU 201 acquires information of optical units having contamination level "2" from the history data of fault detection. The order of step S1515 and step S1516 may be reversed.

In step S1517, the CPU 201 displays icons of check necessary and/or check recommended for faults requiring notification acquired in step S1515 and step S1516 at corresponding coordinates on the cross-sectional diagram 401.

In step S1518, the CPU 201 displays faults requiring notification acquired in step S1515 and step S1516 in order starting from those having high priority. As priority, check necessary (contamination level "3") is set higher than check recommended (contamination level "2"), and in a case in which levels are the same, display is in order of number 1101 of FIG. 19.

In step S1519, the CPU 201 determines whether faults that should be notified are greater in number than faults that are displayable in the notification area of fault detection 404 (for example, three). In a case in which the determination result is NO, processing proceeds to step S1521. In a case in which the determination result is YES, in step S1520, the CPU 201 displays notifications that cannot be fully displayed by the text "Other:" and a number thereof.

In step S1521, the CPU 201 refers to history data 1200 of errors shown in FIG. 20 stored in the HDD 204.

In step S1522, the CPU 201 determines whether currently occurring errors for which recovery time 1205 is not registered in FIG. 20 exist based on results of the reference of step S1521.

In a case in which the determination result is NO, in step S1523, it is determined that "No notifications" is to be displayed in the notification area of errors 405. In a case in which the determination result is YES, in step S1524, the CPU 201 acquires information of occurring errors for which recovery time 1205 is not registered from the history data of errors.

In step S1525, the CPU 201 displays errors requiring notification acquired in step S1524 in descending order of acquisition.

In step S1526, the CPU 201 determines whether errors to be notified are greater in number than errors that can be displayed in the notification area of errors 405 (for example, two). In a case in which the determination result is NO, the processing proceeds to step S1528. In a case in which the determination result is YES, in step S1527, the CPU 201 displays notifications that cannot be fully displayed by the text "Other:" and a number thereof.

In step S1528, the CPU 201 refers to history data 1300 of jams shown in FIG. 21 stored in the HDD 204.

In step S1529, the CPU 201 determines whether currently occurring jams for which recovery time 1306 is not registered in FIG. 21 exist, or whether frequently occurring jams having cumulative number 1307 of 10 or more exist, based on results of the reference in step S1528.

In a case in which the determination result is NO, in step S1530, the CPU 201 determines that no icons of jams are to be displayed in the cross-sectional diagram 401 of FIG. 4, and that "No notifications" is to be displayed in the notification area of jams 406. In a case in which the determination result is YES, in step S1531, the CPU 201 acquires information of currently occurring jams for which recovery time 1306 is not registered from the history data of jams.

In step S1532, the CPU 201 acquires information of frequently occurring jams having cumulative number 1307 of 10 or more from the history data of jams. The order of step S1531 and step S1532 may be reversed. In addition, in a case in which a plurality data having the same jam code are registered among the history data of jams of FIG. 21, information of the most recent data is acquired.

In step S1533, the CPU 201 displays icons representing occurring and/or frequently occurring jams requiring notification acquired in step S1531 and step S1532 at corresponding coordinates on the cross-sectional diagram 401.

In step S1534, the CPU 201 displays jams requiring notification acquired in step S1531 and step S1532 in order starting from jams having high priority. As priority, currently occurring jams are set higher than frequent jams. In a case in which levels are the same, display is in descending order of acquisition, for example. In addition, in a case in which jams that correspond to both currently occurring and frequently occurring exist, currently occurring jams are displayed by prioritizing currently occurring jams over frequent jams.

In step S1535, the CPU 201 determines whether jams to be notified are greater in number than displayable jams in the notification area of jams 406 (for example, two). In a case in which the determination result is NO, processing proceeds to the processing of step S1537. In a case in which the determination result is YES, in step S1536, the CPU 201 displays notifications that cannot be fully displayed by the text "Other:" and a number thereof.

In step S1537, the CPU 201 displays display contents determined in steps S1501 to S1536 on the screen of the operation unit 212. That is, the top screen 400 of the state monitor of FIG. 4 is displayed.

By the processing of FIG. 26 to FIG. 28, abnormalities of the image processing apparatus 103 and occurrence locations thereof that a service person on site wants to confirm urgently can be displayed in the cross-sectional diagram 401 and notification areas (403 to 406). Accordingly, the service person can know the entire picture of abnormalities of the image processing apparatus and occurrence locations thereof from a single screen that is the top screen 400. As a result, efficiency of confirmation work of abnormality locations is improved for the service person required to respond quickly on site. Furthermore, the service person can identify locations at which two or more abnormalities are concentrated from the cross-sectional diagram 401, and can also consider efficient work procedures thereafter, such as collectively handling concentrated abnormalities.

In this manner, according to the present embodiment, as information necessary for maintenance work of the image processing apparatus 103, particularly information related to abnormalities occurring in the apparatus and occurrence locations thereof can be efficiently displayed within a limited screen region, and work efficiency of the service person is improved.

In addition, the service person can also estimate relationships of occurrence of those abnormalities from positional relationships of occurrence of a plurality of abnormalities in the cross-sectional diagram 401. For example, in a case in which a notification of replacement necessary for cassette roller 1 and a notification of frequent jams in the vicinity thereof are acquired at the same time, during a similar time period, or during similar timing, it is understood that there is a high possibility that frequent jams will be resolved by replacing cassette roller 1.

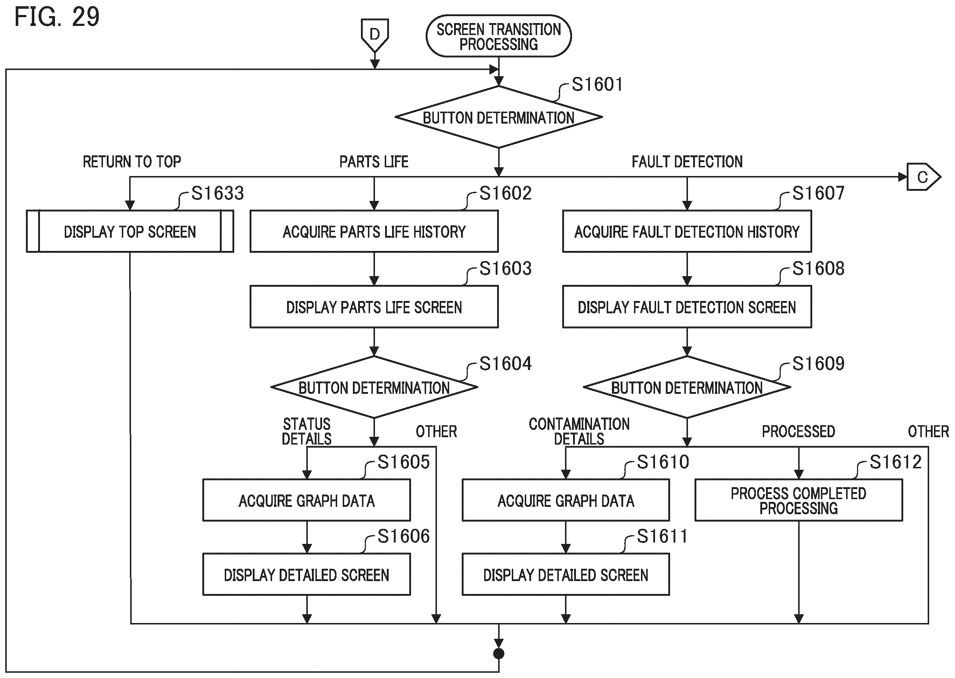

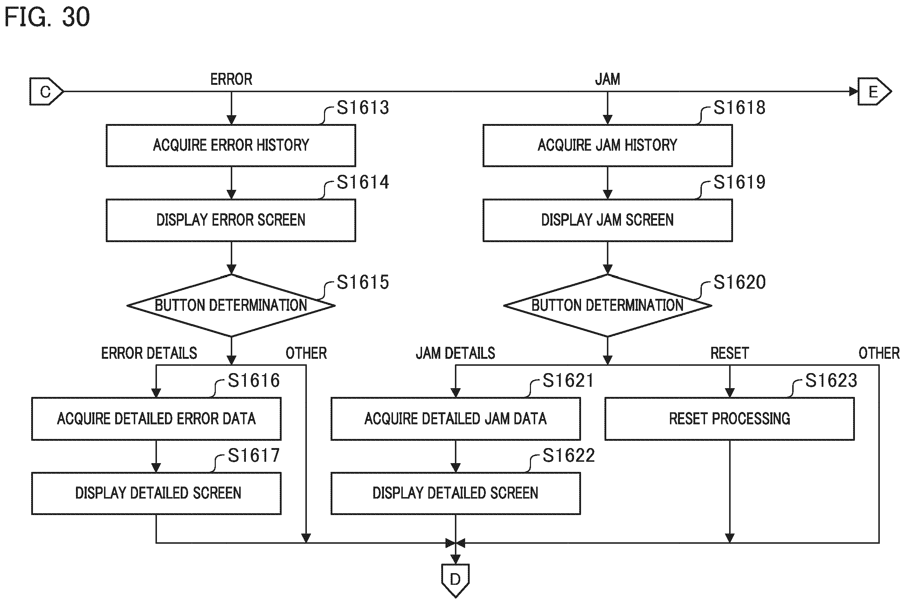

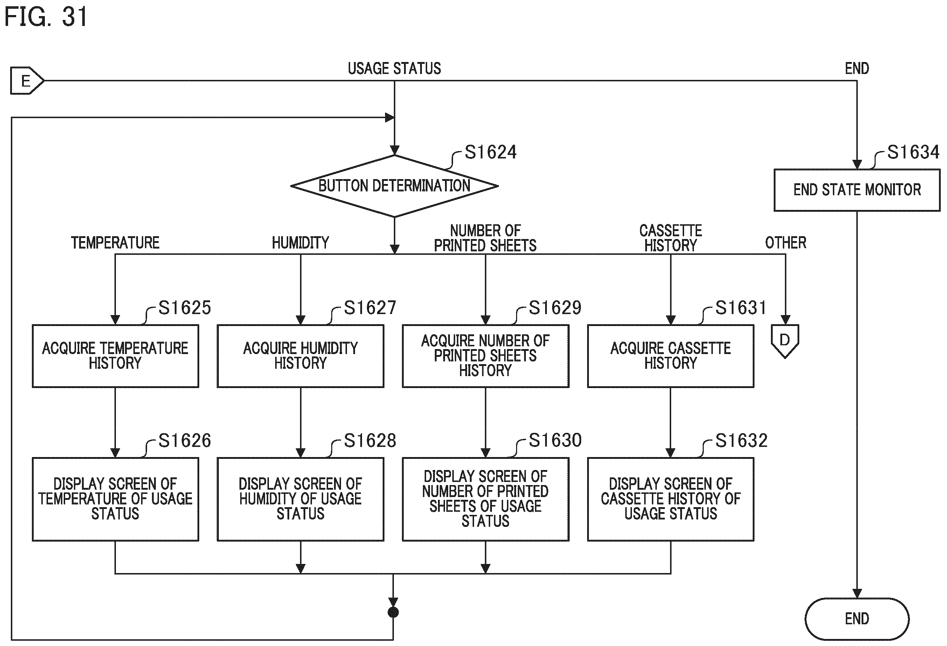

Next, an example of screen transition processing according to operations for switching screens of FIG. 4 to FIG. 17 will be explained for cases in which a service person operates the operation unit 212 after display of the top screen 400 of the state monitor. FIG. 29 to FIG. 31 are flowcharts showing this processing. A program (for example, firmware) for realizing this processing is stored in the HDD 204 of the image processing apparatus 103, and is loaded into the RAM 202 and executed by the CPU 201.

This processing is started based on the CPU 201 accepting input from the service person via the operation unit 212 in a state in which screens of FIG. 4 to FIG. 17 are displayed on the operation unit 212.

When the CPU 201 detects button pressing on the screen, in step S1601, the CPU 201 determines which button among buttons shown in FIG. 4 to FIG. 17 is pressed.

First, a case in which the pressed button is the notification area of parts life 403 or the parts life button 502 will be explained. In a case in which the button pressed in step S1601 is the notification area of parts life 403 or the parts life button 502, the determination result of step S1601 becomes "parts life", and processing proceeds to step S1602.

In step S1602, the CPU 201 refers to history data 1000 of parts life shown in FIG. 18 that is stored in the HDD 204.

In step S1603, the CPU 201 displays the parts life screen 500 of FIG. 6 on the operation unit 212 according to the parts life history data referred to in step S1602. At this time, icons corresponding to abnormalities related to parts life determined in step S1508 of FIG. 26 are displayed in the cross-sectional diagram 401. Other icons (icons corresponding to abnormalities related to fault detection and jams) are not displayed. In addition, states of all parts listed in the history data of parts life shown in FIG. 18 are displayed in the parts list 507.

After display of the parts life screen 500 in step S1603, when the CPU 201 detects button pressing on the screen, in step S1604, the CPU 201 determines which button of the parts life screen 500 is pressed.

In a case in which the button pressed in step S1604 is the state details button 508, the determination result of step S 1604 becomes "state details", and the processing proceeds to step S1605.

In step S1605, the CPU 201 refers to history data 1003 of states (that is, data used for graph creation) of parts selected in the parts list 507 among the parts life history data shown in FIG. 18.

In step S1606, the CPU 201 displays the state details screen 510 of FIG. 7 by creating a graph of state values [%] according to dates in time series of history data 1003 of states referred to in step S1605. At this time, data for the display period specified in the display period 512 is displayed as the state transition graph 511. After display of the state details screen 510, the parts life screen 500 is returned to by the close button 513 (not shown). Thereafter, processing returns to determination waiting of step S1601.

In a case in which the button pressed in step S1604 is not the state details button 508, the determination result of step S1604 becomes "Other", and in step S1601, it is determined which button among buttons 501 to 506 is pressed.

Next, a case in which the pressed button is the notification area of fault detection 404 or is the fault detection button 503 will be explained. In a case in which the button pressed in step S1601 is the notification area of fault detection 404 or the fault detection button 503, the determination result of step S1601 becomes "fault detection", and processing proceeds to step S1607.

In step S1607, the CPU 201 refers to history data 1100 of fault detection shown in FIG. 19 that is stored in the HDD 204.

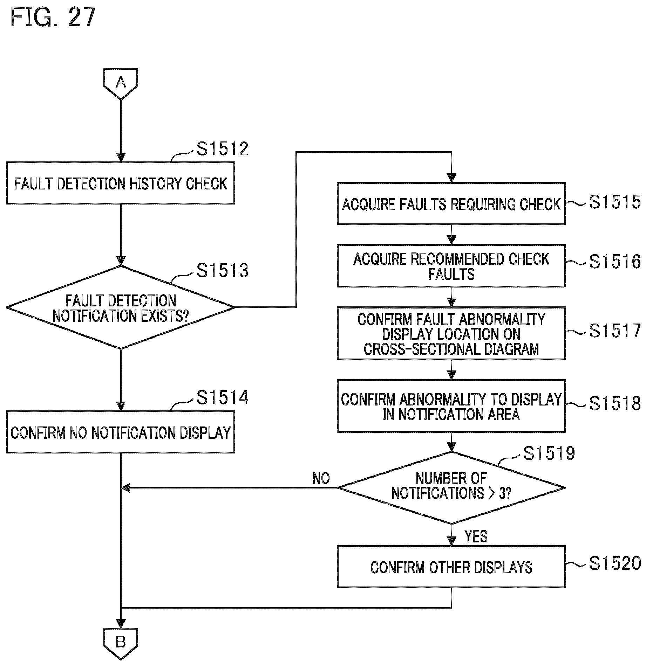

In step S1608, the CPU 201 displays the fault detection screen 600 of FIG. 8 on the operation unit 212 according to the fault detection history data referred to in step S1607. At this time, icons corresponding to abnormalities related to fault detection determined in step S1517 of FIG. 27 are displayed in the cross-sectional diagram 401. Other icons (icons corresponding to abnormalities related to parts life and jams) are not displayed. In addition, states of all faults listed in the fault detection history data shown in FIG. 19 are displayed in the fault list 601.

After display of the fault detection screen 600 in step S1608, when the CPU 201 detects button pressing on the screen, in step S1609, the CPU 201 determines which button of the fault detection screen 600 is pressed.

In a case in which the button pressed in step S1609 is the contamination details button 602, the determination result of step S1609 becomes "contamination details", and the processing proceeds to step S1610. In step S1610, the CPU 201 refers to history data 1103 of fault (that is, data used for creating graphs) of the optical unit selected in the fault list 601 among the fault detection history data shown in FIG. 19.

In step S1611, the CPU 201 displays the contamination details screen 610 of FIG. 9 by creating a graph of contamination degree [%] according to dates in time series of fault history data 1103 referred to in step S1610. At this time, data for the display period specified in the display period 612 is displayed as the contamination transition graph 611. After display of the contamination details screen 610, the fault detection screen 600 is returned to by the close button 613 (not shown). Thereafter, the processing returns to determination waiting of step S1601.

In a case in which the button pressed in step S1609 is the processed button 603, the determination result of step S1609 becomes "processed", and the processing proceeds to step S1612. In step S1612, the CPU 201 executes processed processing of faults selected in the fault list 601. In a case in which a fault selected in the fault list 601 relates to an optical unit, the CPU 201 returns the contamination level of fault history data 1103 to an initial value of "0". In a case in which a fault selected in the fault list 601 relates to a cassette, the CPU 201 returns abnormality detection of fault history data 1103 to an initial value of "none". Thereafter, the CPU 201 displays the fault detection screen 600 reflecting the latest fault detection history data.

In a case in which the button pressed in step S1609 is neither the contamination details button 602 nor the processed button 603, the determination result of step S1609 becomes "other". In this case, in step S1601, it is determined as to which button among buttons 501 to 506 is pressed.

Next, a case in which the pressed button is the notification area of errors 405 or the error button 504 will be explained. In a case in which the button pressed in step S1601 is the notification area of errors 405 or the error button 504, the determination result of step S1601 becomes "error", and the processing proceeds to step S1613.

In step S1613, the CPU 201 refers to history data 1200 of errors shown in FIG. 20 that is stored in the HDD 204.

In step S1614, the CPU 201 displays the error screen 700 of FIG. 10 on the operation unit 212 according to the error history data referred to in step S1613. At this time, the error list 701 displays all errors listed in the error history data shown in FIG. 20.

After display of the error screen 700 in step S1614, when the CPU 201 detects button pressing on the screen, in step S1615, the CPU 201 determines which button of the error screen 700 is pressed.

In a case in which the button pressed in step S1615 is the error details button 702, the determination result of step S1615 becomes "error details", and processing proceeds to step S1616. In step S1616, the CPU 201 refers to detailed information (not shown) registered in the HDD 204 with respect to the error code selected in the error list 701.

In step S1617, the CPU 201 displays the error details screen 710 of FIG. 11 by using the error information referred to in step S1616. After display of the error details screen 710, the error screen 700 is returned to by the close button 714 (not shown). Thereafter, the processing returns to determination waiting of step S1601.

In a case in which the button pressed in step S1615 is not the error details button 702, the determination result of step S1615 becomes "other". In this case, in the determination of step S1601, it is determined which button among buttons 501 to 506 is pressed.

Next, a case in which the pressed button is the notification area of jams 406 or the jam button 505 will be explained. In a case in which the button pressed in step S1601 is the notification area of jams 406 or the jam button 505, the determination result of step S1601 becomes "jam", and the processing proceeds to step S1618.

In step S1618, the CPU 201 refers to history data 1300 of jams shown in FIG. 21 that is stored in the HDD 204.

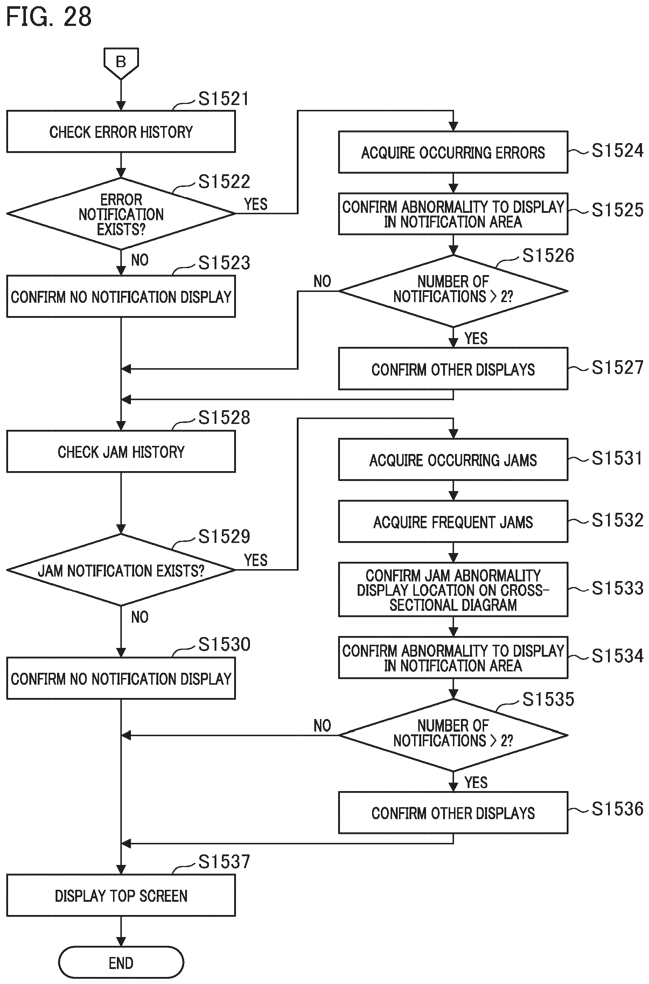

In step S1619, the CPU 201 displays the jam screen 800 of FIG. 12 on the operation unit 212 according to the jam history data referred to in step S1618. At this time, icons corresponding to abnormalities related to jams determined in step S1533 of FIG. 28 are displayed in the cross-sectional diagram 401. Other icons (icons corresponding to abnormalities related to parts life and fault detection) are not displayed. In addition, among the history data of jams shown in FIG. 21, the jam list 801 displays only the latest data for each jam code. That is, with respect to data having the same jam code, only the most recent data is displayed in the jam list 801.

After display of the jam screen 800 in step S1619, when the CPU 201 detects button pressing on the screen, in step S1620, the CPU 201 determines which button of the jam screen 800 is pressed. In a case in which the button pressed in step S1620 is the jam details button 802, the determination result of step S1620 becomes "jam details", and the processing proceeds to step S1621.

In step S1621, the CPU 201 refers to data matching the jam code of the jam selected in the jam list 801 among the history data of jams shown in FIG. 21.

In step S1622, the CPU 201 uses the data having matching jam codes referred to in step S1621, and displays the jam details screen 810 of FIG. 13. After display of the jam details screen 810, the jam screen 800 is returned to by the close button 814 (not shown). Thereafter, the processing returns to determination waiting of step S1601.

In a case in which the button pressed in step S1620 is the reset button 803, the determination result of step S1620 becomes "reset", and the processing proceeds to step S1623.

In step S1623, the CPU 201 deletes the jam history data of FIG. 21 and updates the reset date and time 804 (FIG. 12) to the date and time at which the reset was pressed. Thereafter, the jam screen 800 reflecting the latest jam history data of FIG. 21 is displayed.

In a case in which the button pressed in step S1623 is neither the jam details button 802 nor the reset button 803, the determination result of step S1623 becomes "other". In this case, in the determination of step S1601, it is determined which button among buttons 501 to 506 is pressed.

Next, a case in which the pressed button is the usage status button 407 or the usage status button 506 will be explained. In a case in which the button pressed in step S1601 is the usage status button 407 or the usage status button 506, the determination result of step S1601 becomes "usage status", and the processing proceeds to step S1624.

In step S1624, the CPU 201 determines the button that is pressed in the usage status screen 900 of FIG. 14 (to FIG. 17). The temperature button 901 is the button selected as an initial value of the usage status screen 900. Therefore, in a case of transition from screens other than the usage status screen 900, the determination result of step S1624 becomes "temperature", and the processing proceeds to step S1625.

In step S1625, the CPU 201 refers to temperature data 1400 shown in FIG. 22 that is stored in the HDD 204.

In step S1626, the CPU 201 creates the temperature change graph 905 (FIG. 14) of internal 1403 and external 1404 according to dates 1401 and times 1402 in time series by using the temperature data referred to in step S1625. At this time, the CPU 201 creates a graph for the date specified in the date switching button 906. Then, the CPU 201 displays the temperature change screen of FIG. 14 on the operation unit 212. Thereafter, the processing returns to determination waiting of step S1624.

In a case in which the button pressed in step S1624 is the humidity button 902, the determination result of step S1624 becomes "humidity", and the processing proceeds to step S1627. In step S1627, the CPU 201 refers to humidity data 1410 shown in FIG. 23 that is stored in the HDD 204.

In step S1628, the CPU 201 creates the humidity change graph 907 (FIG. 15) of internal 1413 and external 1414 according to dates 1411 and times 1412 in time series by using the humidity data referred to in step S1627. At this time, the CPU 201 creates a graph for the date specified in the date switching button 908. Then, the CPU 201 displays the humidity change screen of FIG. 15 on the operation unit 212. Thereafter, the processing returns to determination waiting of step S1624.

In a case in which the button pressed in step S1624 is the number of printed sheets button 903, the determination result of step S1624 becomes "number of printed sheets", and the processing proceeds to step S1629. In step S1629, the CPU 201 refers to number of printed sheets data 1420 shown in FIG. 24 that is stored in the HDD 204.

In step S1630, the CPU 201 creates the printed sheets graph 909 (FIG. 16) of number of printed sheets 1423 according to dates 1421 and times 1422 in time series, using the number of printed sheets data referred to in step S1629. In a case in which "day" is selected in the display period switching button 910 of FIG. 16, a graph of number of printed sheets for one day is created at one-hour intervals for time. In a case in which "month" is selected in the display period switching button 910, a graph of number of printed sheets for one month is created at one-day intervals for time. Then, the CPU 201 displays the number of printed sheets screen of FIG. 16 on the operation unit 212. Thereafter, the processing returns to determination waiting of step S1624.

In a case in which the button pressed in step S1624 is the cassette history button 904, the determination result of step S1624 becomes "cassette history", and the processing proceeds to step S1631. In step S1631, the CPU 201 refers to cassette operation data 1430 shown in FIG. 25 that is stored in the HDD 204.

In step S1632, the CPU 201 creates the cassette history list 912 of cassette operation data 1424 according to dates 1431 and times 1432 in time series, using the cassette operation data referred to in step S1631. Here, the CPU 201 creates the cassette history list 912 by extracting data of the cassette selected by the cassette switching button 913 of FIG. 17. For example, because "cassette 1" is selected in the cassette switching button 913 of FIG. 17, the CPU 201 creates the cassette history list 912 by extracting data of "cassette 1" in cassettes 1433 of FIG. 25. Then, the CPU 201 displays the cassette history screen of FIG. 17 on the operation unit 212. Thereafter, the processing returns to determination waiting of step S1624.

In a case in which the button pressed in step S1624 is none of the temperature button 901, the humidity button 902, the number of printed sheets button 903, and the cassette history button 904, the determination result of step S1624 becomes "other". In this case, in the determination of step S1601, it is determined which button among buttons 501 to 506 is pressed.

It should be noted that the return button 501 is provided in FIG. 6 to FIG. 17. In a case in which the return button 501 is pressed, the determination of step S1601 becomes "return", and the processing proceeds to step S1633.

In step S1633, the CPU 201 executes the top screen display processing of FIG. 26 and FIG. 27, and displays the top screen 400.

Finally, a case in which an operation (not shown) for ending the state monitor is input in screens of FIG. 4 to FIG. 17 will be explained. In step S1601, when the CPU 201 detects the operation for ending the state monitor, the determination result of step S1601 becomes "end". Then, processing for ending display of the state monitor is executed in step S1634.

In this manner, in the processing of FIG. 29 to FIG. 31, in order for a service person to confirm detailed information, transition from the top screen 400 of FIG. 4 to the parts life screen 500, the fault detection screen 600, the error screen 700, the jam screen 800, and the usage status screen 900 is possible. Accordingly, the service person can immediately display those screens from the top screen 400 and gather information necessary for taking action. In addition, because moving back and forth between those screens is possible by buttons 502 to 506, the service person can estimate causes of abnormalities from related information within each screen and consider countermeasures based thereon. Furthermore, the service person can perform estimation of timing of abnormality occurrence for locations that have not yet reached abnormality (mainly parts life and contamination of optical units) and perform preparation therefor.

### (Other Embodiments)

As described in the above-described embodiment, predetermined criteria for determining abnormalities may also be established with respect to usage status (history information). In this case, the display unit 302 displays a region for notifying information related to abnormalities with respect to usage status in the top screen 400, similar to the notification areas such as parts life 403 and errors 405. In addition, the display unit 302 may display icons corresponding to the information related to the abnormalities with respect to usage status on the cross-sectional diagram 401. For example, with respect to temperature, in a case in which current temperature exceeds a reference range shown by upper and lower dotted lines in the temperature change graph 905 of FIG. 14, an abnormality can be determined and notification that the current temperature is abnormal can be provided. In this case, for example, an icon corresponding to the temperature abnormality need only be displayed at a predetermined position of the cross-sectional diagram 401, for example, around or in the vicinity of the cross-sectional diagram 401. The same applies with respect to humidity. For example, with respect to number of printed sheets, an abnormality can be determined in a case in which the number of printed sheets exceeds a threshold value. A plurality of threshold values may be set in stages as these temperature criteria and number of printed sheets threshold values.

In the above-described embodiment, although temperature and humidity were configured as elements within the usage status category, a category of "environment" may be established as a separate category of state information, and temperature and humidity may be configured as elements within that "environment" category. In this case, for example, "environment" need only be further established as a category of state in FIG. 4 and FIG. 6, and the like, and when an "environment" button is pressed, screens and buttons for displaying details of temperature or humidity may be displayed.

In the above-described embodiment, in the top screen 400 shown in FIG. 4, usage status (usage status button 407) was displayed as one category. However, the temperature button 901, the humidity button 902, the number of printed sheets button 903, and the cassette history button 904 (FIG. 14) may be displayed instead of the usage status button 407 in the top screen 400.

In the above-described embodiment, in the top screen 400 shown in FIG. 4, transition was made to another screen (FIG. 14 to FIG. 17) from pressing of the usage status button 407. However, by pressing the usage status button 407, screens corresponding to FIG. 14, 15, 16, or 17 may be displayed by being superimposed on the top screen 400 in a popup.

Embodiment(s) of the present disclosure can also be realized by a computer of a system or apparatus that reads out and executes computer executable instructions (e.g., one or more programs) recorded on a storage medium (which may also be referred to more fully as a "non-transitory computer-readable storage medium") to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments.

This application claims the benefit of Japanese Patent Application No. 2024-78846, filed May 14, 2024.

## Claims

1. An image processing apparatus (103) having a display unit (302), comprising:
a management means (304) for managing state information (1000, 1100, 1200, 1300) and history information (1400, 1410, 1420, 1430) of the image processing apparatus, and
a processing means (301) for performing processing based on the managed state information and history information,
wherein the processing based on the state information and history information includes display of display contents on the display unit in a single screen (400) based on both first display information for displaying, for each category, information related to abnormalities among the state information and history information of the image processing apparatus by dividing the information related to abnormalities into a plurality of different categories (403-407), and second display information for displaying data corresponding to the information related to abnormalities at corresponding locations on a schematic diagram (401) of the image processing apparatus.

2. The image processing apparatus according to claim 1,
wherein the information related to abnormalities in the first display information is displayed for each of the categories in order of a predetermined priority.

3. The image processing apparatus according to claim 1,
wherein the information related to abnormalities includes first information showing abnormalities requiring action and second information showing abnormalities for which action is recommended.

4. The image processing apparatus according to claim 1,
wherein among the information related to abnormalities, for each of the categories, one or more display targets of a predetermined number and a number of one or more non-display targets that cannot be fully displayed on the display unit are displayed as the first display information, and
wherein the second display information includes both data corresponding to the one or more display targets and data corresponding to the one or more non-display targets in the first display information.

5. The image processing apparatus according to claim 1,
wherein a region displaying the first display information includes a plurality of operation regions (403-407) corresponding to the plurality of categories, the plurality of operation regions comprising a function of accepting operations to display on the display unit a list of the information related to abnormalities with respect to the state information for each of the categories.

6. The image processing apparatus according to claim 1,
wherein as display contents based on the first display information, the information related to abnormalities is displayed for the plurality of categories including at least one category among parts life (403), errors (405), and faults (404) other than the errors and the jams, in addition to one category related to jams (406).

7. The image processing apparatus according to claim 1,
wherein a region displaying the first display information includes a plurality of operation regions (403-407) corresponding to the plurality of categories, and among the plurality of operation regions, an operation region (407) corresponding to the history information comprises a function of accepting operations to display, on the display unit, usage status of the image processing apparatus based on the history information, the usage status being divided into a plurality of further different categories (901-904).

8. The image processing apparatus according to claim 7,
wherein information displayed as the usage status is displayed as being divided into at least two categories among temperature (901), humidity (902), number of printed sheets (903), and operation history of cassettes (904) as the plurality of categories.

9. The image processing apparatus according to claim 1,
wherein the second display information includes, as data corresponding to the information related to abnormalities, icon images according to priority predetermined with respect to the information related to abnormalities, and
wherein in a case in which information related to a plurality of abnormalities corresponding to a same location on the schematic diagram exist as the information related to abnormalities, an icon image corresponding to information related to an abnormality having highest priority is displayed.

10. The image processing apparatus according to claim 1,
wherein, as the schematic diagram, a different schematic diagram is displayed on the display unit for each configuration or for each type of the image processing apparatus.

11. The image processing apparatus according to claim 1,
wherein the second display information includes information of paper transport paths that are shown on the schematic diagram.

12. The image processing apparatus according to claim 1,
wherein as display contents based on the second display information, on the schematic diagram, data corresponding to the information related to abnormalities is displayed at locations corresponding to at least one among parts life, errors, and faults other than the errors and the jams, in addition to locations corresponding to occurred jams.

13. The image processing apparatus according to claim 1,
wherein the first display information includes, among the information related to abnormalities, information of abnormalities for which locations in the image processing apparatus cannot be specified, the information not displayed in the second display information.

14. A method for an image processing apparatus (103) having a display unit (302), the method comprising:
managing state information (1000, 1100, 1200, 1300) and history information (1400, 1410, 1420, 1430) of the image processing apparatus, and
performing processing based on the managed state information and history information,
wherein the processing based on the state information and history information includes display of display contents on the display unit in a single screen (400) based on both first display information for displaying, for each category, information related to abnormalities among the state information and history information of the image processing apparatus by dividing the information related to abnormalities into a plurality of different categories (403-407), and second display information for displaying data corresponding to the information related to abnormalities at corresponding locations on a schematic diagram (401) of the image processing apparatus.

15. A program for an image processing apparatus (103) having a display unit (302) causing a computer to perform each step of a method for the image processing apparatus, the method comprising:
managing state information (1000, 1100, 1200, 1300) and history information (1400, 1410, 1420, 1430) of the image processing apparatus, and
performing processing based on the managed state information and history information,
wherein the processing based on the state information and history information includes display of display contents on the display unit in a single screen (400) based on both first display information for displaying, for each category, information related to abnormalities among the state information and history information of the image processing apparatus by dividing the information related to abnormalities into a plurality of different categories (403-407), and second display information for displaying data corresponding to the information related to abnormalities at corresponding locations on a schematic diagram (401) of the image processing apparatus.

## Patentansprüche

1. Bildverarbeitungsvorrichtung (103) mit einer Anzeigeeinheit (302), umfassend:
eine Verwaltungseinrichtung (304) zum Verwalten von Zustandsinformationen (1000, 1100, 1200, 1300) und Verlaufsinformationen (1400, 1410, 1420, 1430) der Bildverarbeitungsvorrichtung, und
eine Verarbeitungseinrichtung (301) zum Durchführen einer Verarbeitung basierend auf den verwalteten Zustandsinformationen und Verlaufsinformationen,
wobei die Verarbeitung basierend auf den Zustandsinformationen und Verlaufsinformationen Folgendes enthält: eine Anzeige von Anzeigeinhalten auf der Anzeigeeinheit auf einem einzelnen Bildschirm (400) basierend auf sowohl ersten Anzeigeinformationen zum Anzeigen, für eine jeweilige Kategorie, von Informationen, die sich auf Anomalien beziehen, unter den Zustandsinformationen und Verlaufsinformationen der Bildverarbeitungsvorrichtung durch Unterteilen der Informationen, die sich auf Anomalien beziehen, in mehrere verschiedene Kategorien (403-407), als auch zweiten Anzeigeinformationen zum Anzeigen von Daten, die den Informationen entsprechen, die sich auf Anomalien beziehen, an entsprechenden Stellen auf einem schematischen Diagramm (401) der Bildverarbeitungsvorrichtung.

2. Bildverarbeitungsvorrichtung nach Anspruch 1,
wobei die Informationen, die sich auf Anomalien beziehen, in den ersten Anzeigeinformationen für eine jeweilige der Kategorien in der Reihenfolge einer vorbestimmten Priorität angezeigt werden.

3. Bildverarbeitungsvorrichtung nach Anspruch 1,
wobei die Informationen, die sich auf Anomalien beziehen, erste Informationen, die Anomalien zeigen, die eine Aktion erfordern, und zweite Informationen, die Anomalien zeigen, für die eine Aktion empfohlen wird, enthält.

4. Bildverarbeitungsvorrichtung nach Anspruch 1,
wobei unter den Informationen, die sich auf Anomalien beziehen, für eine jeweilige der Kategorien ein oder mehrere Anzeigeziele einer vorbestimmten Anzahl und eine Anzahl von einem oder mehreren Nicht-Anzeigezielen, die nicht vollständig auf der Anzeigeeinheit angezeigt werden können, als die ersten Anzeigeinformationen angezeigt werden, und
wobei die zweiten Anzeigeinformationen sowohl Daten, die dem einen oder den mehreren Anzeigezielen entsprechen, als auch Daten, die dem einen oder den mehreren Nicht-Anzeigezielen entsprechen, in den ersten Anzeigeinformationen enthalten.

5. Bildverarbeitungsvorrichtung nach Anspruch 1,
wobei ein Bereich, der die ersten Anzeigeinformationen anzeigt, mehrere Betriebsbereiche (403-407) enthält, die den mehreren Kategorien entsprechen, wobei die mehreren Betriebsbereiche eine Funktion des Annehmens von Vorgängen umfassen, um auf der Anzeigeeinheit eine Liste der Informationen, die sich auf Anomalien beziehen, in Bezug auf die Zustandsinformationen für eine jeweilige der Kategorien anzuzeigen.

6. Bildverarbeitungsvorrichtung nach Anspruch 1,
wobei als Anzeigeinhalte basierend auf den ersten Anzeigeinformationen die Informationen, die sich auf Anomalien beziehen, für die mehreren Kategorien angezeigt werden, die mindestens eine Kategorie unter Bauteillebensdauer (403), Fehlern (405) und Störungen (404), die sich von den Fehlern und Stauungen unterscheiden, zusätzlich zu einer Kategorie, die sich auf Stauungen (406) bezieht, enthalten.

7. Bildverarbeitungsvorrichtung nach Anspruch 1,
wobei ein Bereich, der die ersten Anzeigeinformationen anzeigt, mehrere Betriebsbereiche (403-407) enthält, die den mehreren Kategorien entsprechen, und unter den mehreren Betriebsbereichen ein Betriebsbereich (407), der den Verlaufsinformationen entspricht, eine Funktion des Annehmens von Vorgängen umfasst, um auf der Anzeigeeinheit einen Verwendungsstatus der Bildverarbeitungsvorrichtung basierend auf den Verlaufsinformationen anzuzeigen, wobei der Verwendungsstatus in mehrere weitere verschiedene Kategorien (901-904) unterteilt wird.

8. Bildverarbeitungsvorrichtung nach Anspruch 7,
wobei Informationen, die als der Verwendungsstatus angezeigt werden, als in mindestens zwei Kategorien unter Temperatur (901), Feuchtigkeit (902), Anzahl bedruckter Bögen (903) und Betriebsverlauf von Kassetten (904) als die mehreren Kategorien unterteilt angezeigt werden.

9. Bildverarbeitungsvorrichtung nach Anspruch 1,
wobei die zweiten Anzeigeinformationen als Daten, die den Informationen entsprechen, die sich auf Anomalien beziehen, Symbolbilder gemäß einer vorbestimmten Priorität in Bezug auf die Informationen, die sich auf Anomalien beziehen, enthalten, und
wobei in einem Fall, in dem Informationen, die sich auf mehrere Anomalien beziehen, die einer gleichen Stelle auf dem schematischen Diagramm entsprechen, wie die Informationen, die sich auf Anomalien beziehen, vorhanden sind, ein Symbolbild, das Informationen entspricht, die sich auf eine Anomalie beziehen, die die höchste Priorität aufweist, angezeigt wird.

10. Bildverarbeitungsvorrichtung nach Anspruch 1,
wobei als das schematische Diagramm ein anderes schematisches Diagramm auf der Anzeigeeinheit für eine jeweilige Konfiguration oder für einen jeweiligen Typ der Bildverarbeitungsvorrichtung angezeigt wird.

11. Bildverarbeitungsvorrichtung nach Anspruch 1,
wobei die zweiten Anzeigeinformationen Informationen über Papiertransportwege, die auf dem schematischen Diagramm gezeigt sind, enthalten.

12. Bildverarbeitungsvorrichtung nach Anspruch 1,
wobei als Anzeigeinhalte basierend auf den zweiten Anzeigeinformationen auf dem schematischen Diagramm Daten, die den Informationen entsprechen, die sich auf Anomalien beziehen, an Stellen, die mindestens einem von Bauteillebensdauer, Fehlern und Störungen, die sich von den Fehlern und Stauungen unterscheiden, entsprechen, zusätzlich zu Stellen, die aufgetretenen Stauungen entsprechen, angezeigt werden.

13. Bildverarbeitungsvorrichtung nach Anspruch 1,
wobei die ersten Anzeigeinformationen unter den Informationen, die sich auf Anomalien beziehen, Informationen von Anomalien, für die Stellen in der Bildverarbeitungsvorrichtung nicht spezifiziert werden können, enthalten, wobei die Informationen nicht in den zweiten Anzeigeinformationen angezeigt werden.

14. Verfahren für eine Bildverarbeitungsvorrichtung (103) mit einer Anzeigeeinheit (302), wobei das Verfahren umfasst:
Verwalten von Zustandsinformationen (1000, 1100, 1200, 1300) und Verlaufsinformationen (1400, 1410, 1420, 1430) der Bildverarbeitungsvorrichtung, und
Durchführen einer Verarbeitung basierend auf den verwalteten Zustandsinformationen und Verlaufsinformationen,
wobei die Verarbeitung basierend auf den Zustandsinformationen und Verlaufsinformationen Folgendes enthält: eine Anzeige von Anzeigeinhalten auf der Anzeigeeinheit auf einem einzelnen Bildschirm (400) basierend auf sowohl ersten Anzeigeinformationen zum Anzeigen, für eine jeweilige Kategorie, von Informationen, die sich auf Anomalien beziehen, unter den Zustandsinformationen und Verlaufsinformationen der Bildverarbeitungsvorrichtung durch Unterteilen der Informationen, die sich auf Anomalien beziehen, in mehrere verschiedene Kategorien (403-407), als auch zweiten Anzeigeinformationen zum Anzeigen von Daten, die den Informationen entsprechen, die sich auf Anomalien beziehen, an entsprechenden Stellen auf einem schematischen Diagramm (401) der Bildverarbeitungsvorrichtung.

15. Programm für eine Bildverarbeitungsvorrichtung (103) mit einer Anzeigeeinheit (302), das einen Computer veranlasst, einen jeweiligen Schritt eines Verfahrens für die Bildverarbeitungsvorrichtung durchzuführen, wobei das Verfahren umfasst:
Verwalten von Zustandsinformationen (1000, 1100, 1200, 1300) und Verlaufsinformationen (1400, 1410, 1420, 1430) der Bildverarbeitungsvorrichtung, und
Durchführen einer Verarbeitung basierend auf den verwalteten Zustandsinformationen und Verlaufsinformationen,
wobei die Verarbeitung basierend auf den Zustandsinformationen und Verlaufsinformationen Folgendes enthält: eine Anzeige von Anzeigeinhalten auf der Anzeigeeinheit auf einem einzelnen Bildschirm (400) basierend auf sowohl ersten Anzeigeinformationen zum Anzeigen, für eine jeweilige Kategorie, von Informationen, die sich auf Anomalien beziehen, unter den Zustandsinformationen und Verlaufsinformationen der Bildverarbeitungsvorrichtung durch Unterteilen der Informationen, die sich auf Anomalien beziehen, in mehrere verschiedene Kategorien (403-407), als auch zweiten Anzeigeinformationen zum Anzeigen von Daten, die den Informationen entsprechen, die sich auf Anomalien beziehen, an entsprechenden Stellen auf einem schematischen Diagramm (401) der Bildverarbeitungsvorrichtung.

## Revendications

1. Appareil de traitement d'image (103) ayant une unité d'affichage (302), comprenant :
un moyen de gestion (304) pour gérer des informations d'état (1000, 1100, 1200, 1300) et des informations d'historique (1400, 1410, 1420, 1430) de l'appareil de traitement d'image, et
un moyen de traitement (301) pour réaliser un traitement sur la base des informations d'état et des informations d'historique gérées,
dans lequel le traitement sur la base des informations d'état et des informations d'historique comprend l'affichage d'un contenu d'affichage sur l'unité d'affichage dans un seul écran (400) sur la base à la fois de premières informations d'affichage pour afficher, pour chaque catégorie, des informations relatives à des anomalies parmi les informations d'état et les informations d'historique de l'appareil de traitement d'image en divisant les informations relatives à des anomalies en une pluralité de catégories (403-407) différentes, et de secondes informations d'affichage pour afficher des données correspondant aux informations relatives à des anomalies à des emplacements correspondants sur un schéma de principe (401) de l'appareil de traitement d'image.

2. Appareil de traitement d'image selon la revendication 1,
dans lequel les informations relatives à des anomalies dans les premières informations d'affichage sont affichées pour chacune des catégories par ordre de priorité prédéterminée.

3. Appareil de traitement d'image selon la revendication 1,
dans lequel les informations relatives à des anomalies comprennent des premières informations montrant des anomalies nécessitant une action et des secondes informations montrant des anomalies pour lesquelles une action est recommandée.

4. Appareil de traitement d'image selon la revendication 1,
dans lequel, parmi les informations relatives à des anomalies, pour chacune des catégories, une ou plusieurs cibles d'affichage d'un nombre prédéterminé et un nombre d'une ou plusieurs cibles de non-affichage qui ne peuvent pas être entièrement affichées sur l'unité d'affichage sont affichés en tant que premières informations d'affichage, et
dans lequel les secondes informations d'affichage comprennent à la fois des données correspondant aux une ou plusieurs cibles d'affichage et des données correspondant aux une ou plusieurs cibles de non-affichage dans les premières informations d'affichage.

5. Appareil de traitement d'image selon la revendication 1,
dans lequel une région affichant les premières informations d'affichage comprend une pluralité de régions d'opération (403-407) correspondant à la pluralité de catégories, la pluralité de régions d'opération comprenant une fonction d'acceptation d'opérations pour afficher sur l'unité d'affichage une liste des informations relatives à des anomalies par rapport aux informations d'état pour chacune des catégories.

6. Appareil de traitement d'image selon la revendication 1,
dans lequel, en tant que contenu d'affichage sur la base des premières informations d'affichage, les informations relatives à des anomalies sont affichées pour la pluralité de catégories comprenant au moins une catégorie parmi la durée de vie des pièces (403), des erreurs (405) et des pannes (404) autres que les erreurs et les bourrages, en plus d'une catégorie relative à des bourrages (406).

7. Appareil de traitement d'image selon la revendication 1,
dans lequel une région affichant les premières informations d'affichage comprend une pluralité de régions d'opération (403-407) correspondant à la pluralité de catégories, et parmi la pluralité de régions d'opération, une région d'opération (407) correspondant aux informations d'historique comprend une fonction d'acceptation d'opérations pour afficher, sur l'unité d'affichage, l'état d'utilisation de l'appareil de traitement d'image sur la base des informations d'historique, l'état d'utilisation étant divisé en une pluralité d'autres catégories (901-904) différentes.

8. Appareil de traitement d'image selon la revendication 7,
dans lequel des informations affichées en tant qu'état d'utilisation sont affichées comme étant divisées en au moins deux catégories parmi la température (901), l'humidité (902), le nombre de feuilles imprimées (903) et l'historique de fonctionnement de cassettes (904) comme la pluralité de catégories.

9. Appareil de traitement d'image selon la revendication 1,
dans lequel les secondes informations d'affichage comprennent, en tant que données correspondant aux informations relatives à des anomalies, des images d'icône selon une priorité prédéterminée par rapport aux informations relatives à des anomalies, et
dans lequel, dans un cas où des informations relatives à une pluralité d'anomalies correspondant à un même emplacement sur le schéma de principe existent en tant qu'informations relatives à des anomalies, une image d'icône correspondant à des informations relatives à une anomalie ayant la priorité la plus élevée est affichée.

10. Appareil de traitement d'image selon la revendication 1,
dans lequel, en tant que schéma de principe, un schéma de principe différent est affiché sur l'unité d'affichage pour chaque configuration ou pour chaque type d'appareil de traitement d'image.

11. Appareil de traitement d'image selon la revendication 1,
dans lequel les secondes informations d'affichage comprennent des informations de chemins de transport de papier qui sont représentés sur le schéma de principe.

12. Appareil de traitement d'image selon la revendication 1,
dans lequel, en tant que contenu d'affichage sur la base des secondes informations d'affichage, sur le schéma de principe, des données correspondant aux informations relatives à des anomalies sont affichées à des emplacements correspondant à au moins une parmi la durée de vie des pièces, des erreurs et des pannes autres que les erreurs et les bourrages, en plus des emplacements correspondant à des bourrages ayant eu lieu.

13. Appareil de traitement d'image selon la revendication 1,
dans lequel les premières informations d'affichage comprennent, parmi les informations relatives à des anomalies, des informations d'anomalies pour lesquelles des emplacements dans l'appareil de traitement d'image ne peuvent pas être spécifiés, les informations n'étant pas affichées dans les secondes informations d'affichage.

14. Procédé pour un appareil de traitement d'image (103) ayant une unité d'affichage (302), le procédé comprenant :
la gestion d'informations d'état (1000, 1100, 1200, 1300) et d'informations d'historique (1400, 1410, 1420, 1430) de l'appareil de traitement d'image, et
la réalisation d'un traitement sur la base des informations d'état et des informations d'historique gérées,
dans lequel le traitement sur la base des informations d'état et des informations d'historique comprend l'affichage d'un contenu d'affichage sur l'unité d'affichage dans un seul écran (400) sur la base à la fois de premières informations d'affichage pour afficher, pour chaque catégorie, des informations relatives à des anomalies parmi les informations d'état et les informations d'historique de l'appareil de traitement d'image en divisant les informations relatives à des anomalies en une pluralité de catégories (403-407) différentes, et de secondes informations d'affichage pour afficher des données correspondant aux informations relatives à des anomalies à des emplacements correspondants sur un schéma de principe (401) de l'appareil de traitement d'image.

15. Programme pour un appareil de traitement d'image (103) ayant une unité d'affichage (302) amenant un ordinateur à réaliser chaque étape d'un procédé pour l'appareil de traitement d'image, le procédé comprenant :
la gestion d'informations d'état (1000, 1100, 1200, 1300) et d'informations d'historique (1400, 1410, 1420, 1430) de l'appareil de traitement d'image, et
la réalisation d'un traitement sur la base des informations d'état et des informations d'historique gérées,
dans lequel le traitement sur la base des informations d'état et des informations d'historique comprend l'affichage d'un contenu d'affichage sur l'unité d'affichage dans un seul écran (400) sur la base à la fois de premières informations d'affichage pour afficher, pour chaque catégorie, des informations relatives à des anomalies parmi les informations d'état et les informations d'historique de l'appareil de traitement d'image en divisant les informations relatives à des anomalies en une pluralité de catégories (403-407) différentes, et de secondes informations d'affichage pour afficher des données correspondant aux informations relatives à des anomalies à des emplacements correspondants sur un schéma de principe (401) de l'appareil de traitement d'image.
